# EUROPEAN PATENT SPECIFICATION

(11) **EP 4 365 240 B1**
(45) Date of publication and mention of the grant of the patent: **12.08.2026**
(21) Application number: 22832804.3
(22) Date of filing: 14.06.2022
(51) Int. Cl.: C08L 83/07, C08G 77/44, C08G 77/48, C08G 81/00, C08J 3/12, C08J 7/04, C08L 83/05

(54) **LIQUID COMPOSITION FOR SILICONE RUBBER SPHERICAL PARTICLES, SILICONE RUBBER SPHERICAL PARTICLES AND PRODUCTION METHOD THEREFOR, AND SILICONE COMPOSITE PARTICLES AND PRODUCTION METHOD THEREFOR**
FLÜSSIGE ZUSAMMENSETZUNG FÜR SILIKONKAUTSCHUK-KUGELPARTIKEL, SILIKONKAUTSCHUK-KUGELPARTIKEL UND HERSTELLUNGSVERFAHREN DAFÜR SOWIE SILIKONVERBUNDPARTIKEL UND HERSTELLUNGSVERFAHREN DAFÜR
COMPOSITION LIQUIDE POUR PARTICULES SPHÉRIQUES DE CAOUTCHOUC DE SILICONE, PARTICULES SPHÉRIQUES DE CAOUTCHOUC DE SILICONE ET PROCÉDÉ DE PRODUCTION ASSOCIÉ, ET PARTICULES COMPOSITES DE SILICONE ET PROCÉDÉ DE PRODUCTION ASSOCIÉ

(30) Priority: 01.07.2021 JP 2021109990
(43) Date of publication of application: 08.05.2024
(73) Proprietor: SHIN-ETSU CHEMICAL CO., LTD., Tokyo 1000005 (JP)
(72) Inventor: OKI Takahito, Annaka-shi, Gunma 379-0224 (JP); INOKUCHI Yoshinori, Annaka-shi, Gunma 379-0224 (JP); AOKI Shunji, Annaka-shi, Gunma 379-0224 (JP); KIMURA Tsuneo, Annaka-shi, Gunma 379-0224 (JP)
(74) Representative: Sonnenhauser, Thomas Martin
(86) International application number: PCT/JP2022/023749
(87) International publication number: WO 2023/276648

(56) References cited:
- WO-A1-2017/191798
- WO-A1-2019/124418
- WO-A1-2019/189394
- WO-A1-2021/220625
- WO-A1-2022/019179
- US-A1- 2020 332 124

## Description

### TECHNICAL FIELD

The present invention relates to: a liquid composition for a silicone rubber spherical particle; a silicone rubber spherical particle; a method for manufacturing the same; a silicone composite particle; and a method for manufacturing the same.

### BACKGROUND ART

Conventionally, uses for silicone rubber spherical particles and powders are proposed in a wide range of industrial fields. For example, addition and mixing in synthetic resin materials (see Patent Documents 1 and 2), synthetic rubber materials (see Patent Document 3), cosmetics (see Patent Documents 4 to 7), etc. are shown.

As indicated above, silicone rubber spherical particles utilizing "flexibility" are mixed and used as a stress-lowering agent for epoxy resin, for example. Specifically, the proposal includes epoxy resin (see Patent Document 8) containing particles of cured polymer material having a linear organopolysiloxane block, epoxy resin (see Patent Document 9) containing silicone rubber spherical particles the surface of which is coated with polyorganosilsesquioxane, etc.

For other examples in the above uses, in cosmetics, silicone spherical particles are used for the purpose of imparting dry or smooth feeling on use, etc., and spreadability. For example, cosmetics containing polymethylsilsesquioxane powder (see Patent Document 10), make-up cosmetics containing silicone rubber spherical powder (see Patent Document 11), and cosmetics containing composite silicone powder obtained by coating silicone rubber spherical fine particles with polyorganosilsesquioxane resin (see Patent Document 12) are proposed. These silicone rubber spherical particles and particles obtained by coating silicone rubber spherical particles with polyorganosilsesquioxane resin can provide cosmetics with a soft feeling in addition to the above-described feeling on use.

In addition, by incorporating silicone rubber spherical particles into make-up cosmetics such as foundations it is possible to give a natural finish effect (soft-focus effect) without unnatural gloss due to expression of light diffusion characteristics. For example, according to a manufacturing method disclosed in Patent Document 12, polyorganosilsesquioxane which coats silicone spherical particles has a particle size of about 100 nm. This also scatters light, and therefore, it is possible to provide cosmetics with high soft-focus effect.

US2020/332124 A1 discloses the preparation of silicone resin-coated silicone elastomer particles from hydrosilylation reactive starting materials. The alkenyl-functional polyorganosiloxane has long chain alkenyl substituents, e.g. hexenyl.

### CITATION LIST

### PATENT LITERATURE

Patent Document 1 JPS63-12489 B2
Patent Document 2 JPH06-55805 B2
Patent Document 3 JPH02-102263 A
Patent Document 4 JPH08-12546 A
Patent Document 5 JPH08-12545 A
Patent Document 6 JPH04-17162 B2
Patent Document 7 JPH04-66446 B2
Patent Document 8 JPS58-219218 A
Patent Document 9 JPH08-85753 A
Patent Document 10 JPS63-297313 A ·
Patent Document 11 JPH08-12524 A
Patent Document 12 JPH09-20631 A

### SUMMARY OF INVENTION

### TECHNICAL PROBLEM

However, because of small size of these silicone rubber spherical particles, it is difficult to recover them after use, and when they are released or disposed of in the natural world, there is a risk that they will flow through land water and into the ocean. Furthermore, the silicon rubber spherical particles released into the ocean do not have a degradable skeleton or structure within their structure, and therefore, they may remain as particles in the environment and pollute the ocean.

In addition, plastics/microplastics in the ocean have a property of adsorbing harmful substances and pathogens in the environment, and therefore, if these are taken into bodies of marine organisms, there is concern that they may have a negative impact also on the ecosystem.

The present invention has been made in view of the above circumstances, and an object thereof is to provide a degradable silicone rubber spherical particle that "decomposes" when the crosslinked structure of the silicone rubber spherical particle is cut by external stimuli (light, heat, acid, base, etc.) in the natural environment; a composite particle thereof; and a manufacturing method thereof.

### SOLUTION TO PROBLEM

To achieve the object, the present invention provides a liquid composition for a silicone rubber spherical particle comprising:
(A) a polysiloxane represented by the following general formula (1) and having at least two alkenyl groups per molecule, 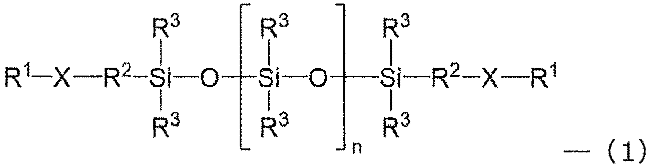 wherein R¹ is an alkenyl group having 1 to 20 carbon atoms, R² is a divalent hydrocarbon group having 1 to 20 carbon atoms and may have an ether bond, R³ is an alkyl group or an alkenyl group having 1 to 20 carbon atoms, X is an ester group having "-COO-" or "-OCO-", and "n" is a number satisfying 1≤n≤1000;
(B) an organohydrogenpolysiloxane represented by the following general formula (2) and having at least two hydrogen atoms bonded to a silicon atom per molecule, 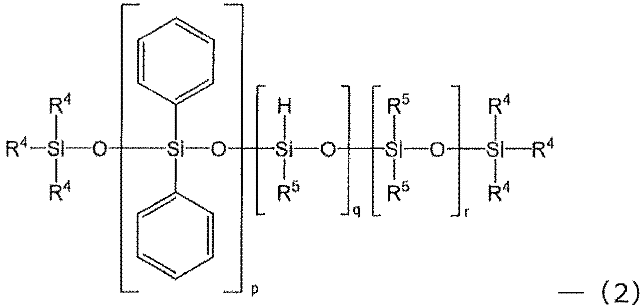 wherein R⁴ independently represents a hydrogen atom, or a monovalent hydrocarbon group or an alkoxy group having 1 to 12 carbon atoms, R⁵ represents a monovalent hydrocarbon group having 1 to 12 carbon atoms, and "p", "q", and "r" are numbers satisfying 0≤p≤200, 1≤q≤200, and 0≤r≤200, respectively (wherein at least one of: the number of alkenyl groups in the component (A); and the number of hydrogen atoms bonded to a silicon atom in the component (B) is at least 3 per molecule); and
(C) a hydrosilylation-reaction catalyst.

Such a composition makes it possible to obtain a degradable silicone rubber spherical particle that "decomposes" when the crosslinked structure of the silicone rubber spherical particle is cut by external stimuli (light, heat, acid, base, etc.) in the natural environment.

Further, the present invention also provides a silicone rubber spherical particle being a cured material of the liquid composition for a silicone rubber spherical particle by addition reaction.

Such a silicone rubber spherical particle is a degradable silicone rubber spherical particle that "decomposes" when the crosslinked structure is cut by external stimuli (light, heat, acid, base, etc.) in the natural environment.

Further, the spherical particle preferably has a volume average particle size of 0.5 to 100 µm.

By having such a volume average particle size, the silicone composite particle obtained from the inventive silicone rubber spherical particle has low agglomeration, disperses easily, and has dry or smooth feeling.

Further, the present invention provides a silicone composite particle, wherein a spherical or hemispherical polyorganosilsesquioxane or silica is adhered on a surface of the silicone rubber spherical particle.

Such a silicone composite particle is a degradable silicone composite particle that "decomposes" when the crosslinked structure is cut by external stimuli (light, heat, acid, base, etc.) in the natural environment.

Further, the present invention provides a method for manufacturing the silicone rubber spherical particle, comprising the steps of:
(i) obtaining an O/W type emulsion comprising an aqueous phase component and an oil phase component comprising a liquid composition containing the components (A) to (C); and
(ii) obtaining an aqueous dispersion of a silicone rubber spherical particle by curing the liquid composition in an oil phase in the O/W type emulsion obtained in the step (i) through addition reaction.

The inventive silicone rubber spherical particle can be manufactured by such a method.

In this event, after the step (ii), it is possible to have a step (iii) of removing water present in an external phase and in the silicone rubber spherical particle, from the aqueous dispersion of the silicone rubber spherical particle obtained in the step (ii).

By such a method, the inventive silicone rubber spherical particle can be obtained as a powder.

Further, the present invention provides a method for manufacturing the silicone composite particle, comprising the steps of:
(i) obtaining an O/W type emulsion comprising an aqueous phase component and an oil phase component comprising a liquid composition containing the components (A) to (C); and
(ii) obtaining an aqueous dispersion of a silicone rubber spherical particle by curing the liquid composition in an oil phase in the O/W type emulsion obtained in the step (i) through addition reaction; and
(iv) subjecting organotrialkoxysilane or tetraalkoxysilane to hydrolysis and polycondensation in the presence of the silicone rubber spherical particle obtained in the step (ii), water, and an alkaline substance, to make a spherical or hemispherical polyorganosilsesquioxane or silica adhere to a surface of the silicone rubber spherical particle.

By such a method, the inventive silicone composite particle can be obtained.

### ADVANTAGEOUS EFFECTS OF INVENTION

The silicone rubber spherical particle and the composite particle obtained from the inventive liquid composition for silicone rubber spherical particle contains an ester group, which is a degradable functional group, in the crosslinking skeleton or structure of organopolysiloxane in the rubber spherical particle. Therefore, the crosslinking structure is cut in the environment in the existence of water and it is expected to give degradability. By incorporating a caprolactone skeleton, which is a microbe-recognizable skeleton, into the structure as the ester group, biodegradability in the natural environment can also be expected.

### BRIEF DESCRIPTION OF DRAWINGS

FIG. 1 is an electron micrograph of silicone composite particles obtained in Examples;
FIG. 2 is an enlarged electron micrograph of FIG. 1; and
FIG. 3 is a further enlarged electron micrograph of FIG. 1.

### DESCRIPTION OF EMBODIMENTS

As described above, it is desired to develop a degradable silicone rubber spherical particle that "decomposes" when the crosslinked structure of the silicone rubber spherical particle is cut by external stimuli (light, heat, acid, base, etc.) in the natural environment; a composite particle thereof; and a manufacturing method thereof.

To solve the above problem, the present inventors have earnestly studied, found out that the problems can be solved by using a silicone rubber spherical particle and a composite particle having a base polymer in which an ester structure is incorporated into a polyorganosiloxane skeleton, and completed the present invention.

That is, the present invention relates to a liquid composition for a silicone rubber spherical particle comprising:
(A) a polysiloxane represented by the following general formula (1) and having at least two alkenyl groups per molecule, 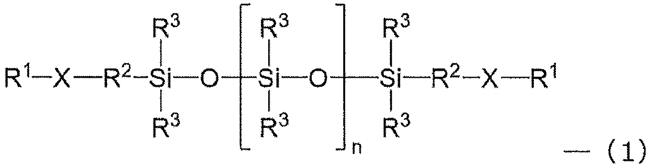 wherein R¹ is an alkenyl group having 1 to 20 carbon atoms, R² is a divalent hydrocarbon group having 1 to 20 carbon atoms and may have an ether bond, R³ is an alkyl group or an alkenyl group having 1 to 20 carbon atoms, X is an ester group having "-COO-" or "-OCO-", and "n" is a number satisfying 1≤n≤1000;
(B) an organohydrogenpolysiloxane represented by the following general formula (2) and having at least two hydrogen atoms bonded to a silicon atom per molecule, 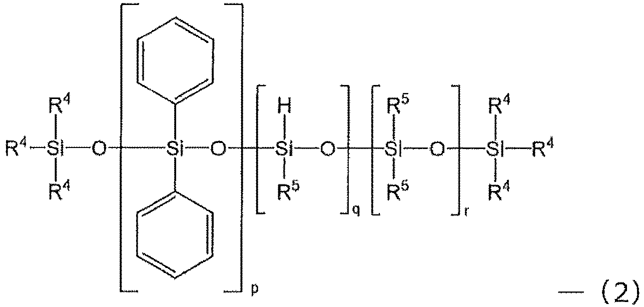 wherein R⁴ independently represents a hydrogen atom, or a monovalent hydrocarbon group or an alkoxy group having 1 to 12 carbon atoms, R⁵ represents a monovalent hydrocarbon group having 1 to 12 carbon atoms, and "p", "q", and "r" are numbers satisfying 0≤p≤200, 1≤q≤200, and 0≤r≤200, respectively (wherein at least one of: the number of alkenyl groups in the component (A); and the number of hydrogen atoms bonded to a silicon atom in the component (B) is at least 3 per molecule); and
(C) a hydrosilylation-reaction catalyst.

Hereinafter, the present invention will be described in detail. However, the present invention is not limited thereto.

### [Liquid Composition for Silicone Rubber Spherical Particle]

The inventive liquid composition for silicone rubber spherical particle includes the following components (A) to (C) and other components as necessary. Hereinafter, each component constituting the inventive liquid composition for silicone rubber spherical particle will be explained.

### [Component (A)]

The component (A) is a polysiloxane represented by the following general formula (1) and having at least two alkenyl groups per molecule, and can be used solely or in appropriate combination of two or more kinds. 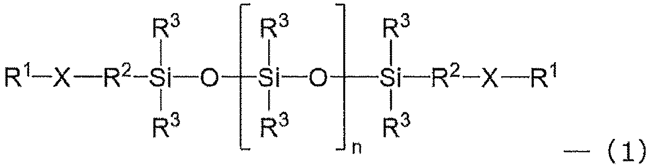 [R¹ is an alkenyl group having 1 to 20 carbon atoms. R² is a divalent hydrocarbon group having 1 to 20 carbon atoms and may have an ether bond. R³ is an alkyl group or an alkenyl group having 1 to 20 carbon atoms. X is an ester group having "-COO-" or "-OCO-". "n" is a number satisfying 1≤n≤1000.]

Examples of R¹ in the general formula (1) can include, alkenyl groups such as a vinyl group, an allyl group, a propenyl group, a butenyl group, a pentenyl group, a hexenyl group, a heptenyl group, an octenyl group, a decenyl group, an undecenyl group, a dodecenyl group, etc., but a vinyl group, an allyl group, an undecenyl group are industrially preferable.

Examples of R² in the general formula (1) can include, alkylene groups such as a methylene group, an ethylene group, a propylene group, a butylene group, a hexylene group, a heptylene group, an octylene group, a decylene group, an undecylene group, a dodecylene group, etc., but it is preferable to be an ethylene group or higher. R² may contain ether in its hydrocarbon skeleton. Such examples include, oxymethylene, oxyethylene, oxypropylene, oxybutylene, etc., but they are industrially preferable to be contained in a structure of oxymethylene or oxyethylene.

Examples of R³ in the general formula (1) can include, alkyl groups such as a methyl group, an ethyl group, a propyl group, a butyl group, a pentyl group, a hexyl group, a heptyl group, an octyl group, a decyl group, an undecyl group, a dodecyl group, a tetradecyl group, a pentadecyl group, a hexadecyl group, a heptadecyl group, an octadecyl group, a nonadecyl group, an icosyl group, etc.; alkenyl groups such as a vinyl group, an allyl group, a propenyl group, a butenyl group, a pentenyl group, a hexenyl group, a heptenyl group, an octenyl group, a decenyl group, an undecenyl group, a dodecenyl group, etc.; aryl groups such as a phenyl group, a tolyl group, a naphthyl group, etc.; aralkyl groups such as a benzyl group, a phenethyl group, etc. However, a methyl group, an ethyl group, a vinyl group, and an allyl group are industrially preferable.

"n" is a number satisfying 1≤n≤1000, preferably 1≤n≤200, more preferably 5≤n≤100, further preferably 10≤n≤70.

The component (A) is preferably liquid, and its kinematic viscosity at 25°C is preferably 100,000 mm²/s or less, more preferably 10,000 mm²/s or less. When the kinematic viscosity is equal to or less than the above upper limit, a particle having a narrow particle size distribution can be surely obtained according to the inventive manufacturing method described later. Further, it gives good degradability. The lower limit is not particularly limited, but it is preferable to be 1 mm²/s or more. Note that kinematic viscosity in the present invention is a measured value at 25°C with an Ostwald viscometer.

Specific examples include those having the following structures.

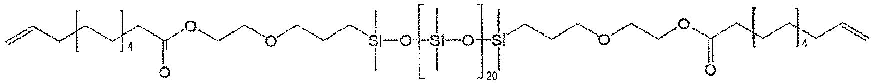

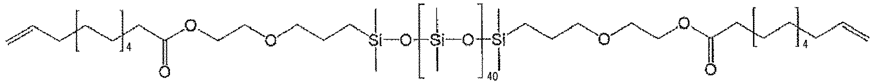

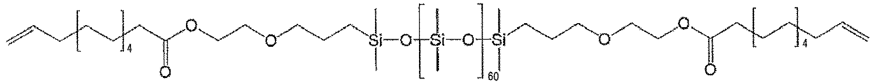

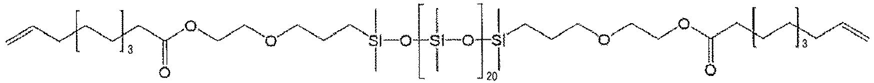

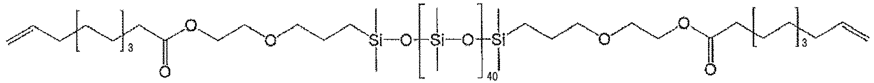

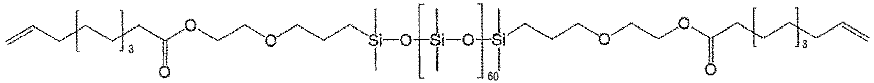

In the present invention, the component (A) of the liquid composition for silicone rubber spherical particle is a reaction product of: (A-1) a polysiloxane represented by the following general formula (3) and having a terminal modified with an organic functional group; and (A-2) a terminal functional group derivative represented by the following general formula (4) and having an alkenyl group. 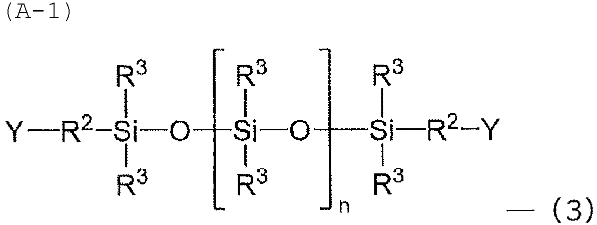 [R² is a divalent hydrocarbon group having 1 to 20 carbon atoms and may have an ether bond. R³ is an alkyl group or an alkenyl group having 1 to 20 carbon atoms. Y is a hydroxy group, an alkoxy group, or a carboxy group. "n" is a number satisfying 1≤n≤1000.]
(A-2)

Z-R¹- (4)

[R¹ is an alkenyl group having 1 to 20 carbon atoms. Z is -COCl, -COBr, a hydroxy group, an ester group, or a carboxy group.]

Further, the component (A) is a polysiloxane having the X-group: ester of -COO- or -OCO-, which is formed by a reaction between the Y-group of the component (A-1) and the Z-group of the component (A-2), and having at least two alkenyl groups per molecule.

### [Component (A-1)]

The component (A-1) is a polysiloxane represented by the following general formula (3) and having a terminal modified with an organic functional group. The component (A-1) can be used alone or in appropriate combination of two or more kinds. 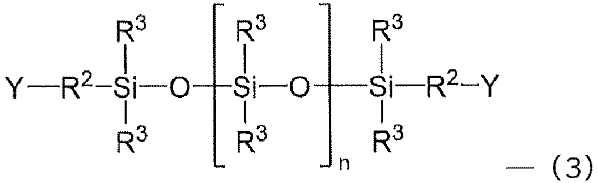 [R² is a divalent hydrocarbon group having 1 to 20 carbon atoms and may have an ether bond. R³ is an alkyl group or an alkenyl group having 1 to 20 carbon atoms. Y is a hydroxy group, an alkoxy group, or a carboxy group. "n" is a number satisfying 1≤n≤1000.]

Examples of R² in the general formula (3) can include, those exemplified for the component (A). It is industrially preferable to contain them in structure of oxymethylene or oxyethylene.

Examples of R³ in the general formula (3) can include, those exemplified for the component (A). It is industrially preferable to be a methyl group, an ethyl group, a vinyl group, or an allyl group.

Examples of the compound represented by the general formula (3) can include: 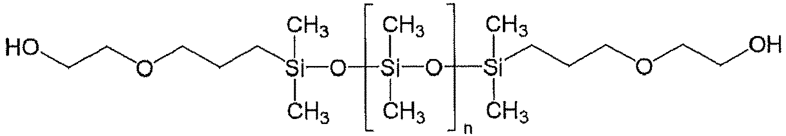
(n=10, 20, 40, 60)
carbinol-modified polysiloxane with structural formula shown above; and 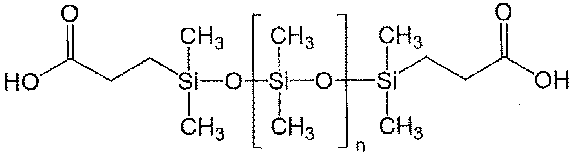
(n=10, 20, 40, 60) 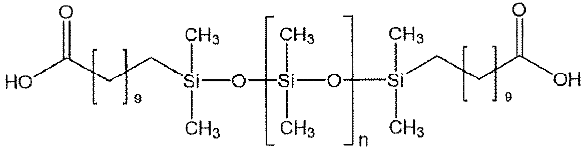
(n=10, 20, 40, 60. g=0 to 19)
modified polysiloxanes with structural formulae shown above, such as carboxy-modified polysiloxanes, etc.

### [Component (A-2)]

The component (A-2) is a terminal functional group derivative represented by the following general formula (4) and having an alkenyl group. The component (A-2) can be used alone or in appropriate combination of two or more kinds.

Z-R¹- (4)

[R¹ is an alkenyl group having 1 to 20 carbon atoms. Z is -COCl, -COBr, a hydroxy group, an ester group, or a carboxy group.]

Examples of R¹ in the general formula (4) can include, those exemplified in the above for the component (A), and it is industrially preferable to be a vinyl group, an allyl group, or an undecenyl group.

Examples of the compound represented by the general formula (4) can include: 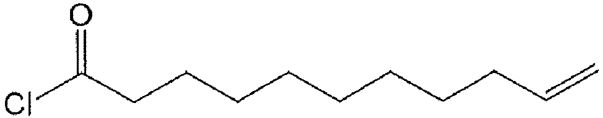 10-Undecenoyl chloride with the structural formula shown above; and

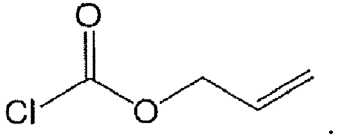

### [Method for Manufacturing Component (A)]

The method for manufacturing the component (A) can include those shown below for example, but is not limited thereto. When the polysiloxane component represented by the general formula (3) and having a terminal modified with an organic functional group has 1 mol of the functional group, a base is mixed and stirred therein in an excess amount of 2.0 to 8.0 mol, preferably 2.2 to 6.0 mol for the purpose of capturing acids generated in the reaction. In this condition, the terminal functional group derivative (e.g., acid chloride) having an alkenyl group and represented by the above general formula (4) is added or dropped thereto in an excess amount of 2.0 to 7.0 mol, preferably 2.2 mol or more and 6.0 mol or less.

After that, the mixture is reacted and aged with heating at 100°C or less for 1 hour or longer, thereafter the reaction crude product is subjected to an extraction step, an water washing step, and an adsorption and dehydration step to remove by-products, and finally the solvent is distilled away to obtain the objective component (A) .

The base is added to capture acids generated by the reaction. Bases that do not react with the polysiloxane having a terminal modified with an organic functional group or the terminal functional group derivative having an alkenyl group can be selected and used. Examples of such a base can include preferably tertiary amine, more preferably triethylamine.

In order to improve compatibility of the components (A) and (B) and to control viscosity of the mixed composition, in reaction process, an organic solvent may be used. The kind of the organic solvent is not particularly limited, but toluene is preferable in view of solubility.

The adsorption and dehydration step includes removing a base hydrochloride which cannot be removed in the water washing step, dehydration, decoloring, and deodorization. An absorbent which can be used for the step may be conventionally known one, and may be used alone or in combination of a plurality of kinds.

Specific examples of the absorbent can include desiccants such as magnesium sulfate and sodium sulfate, activated carbon, silica gel, KYOWAAD series (manufactured by Kyowa Chemical Industry Co., Ltd.), etc.

### [Component (B)]

The component (B) is an organohydrogenpolysiloxane represented by the following general formula (2) and having at least two hydrogen atoms bonded to a silicon atom per molecule. The component (B) can be used alone or in appropriate combination of two or more kinds. 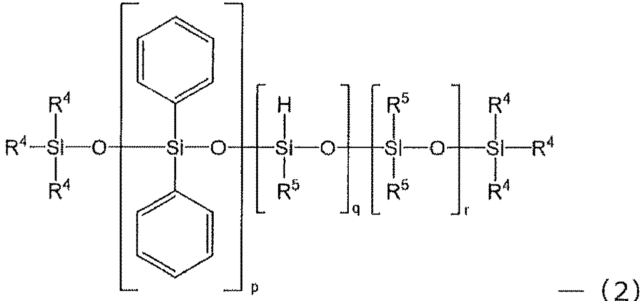 [R⁴ independently represents a hydrogen atom, or a monovalent hydrocarbon group or an alkoxy group having 1 to 12 carbon atoms. R⁵ represents a monovalent hydrocarbon group having 1 to 12 carbon atoms. "p", "q", and "r" are numbers satisfying 0≤p≤200, 1≤q≤200, and 0≤r≤200, respectively.]

R⁴ in the general formula (2) includes a hydrogen atom, and hydrocarbon groups of: alkyl groups such as a methyl group, an ethyl group, a propyl group, a butyl group, a pentyl group, a hexyl group, a heptyl group, an octyl group, a decyl group, an undecyl group, a dodecyl group, etc.; cycloalkyl groups such as a cyclopentyl group, a cyclohexyl group, a cycloheptyl group, etc.; alkoxy groups such as a methoxy group, an ethoxy group, etc. It is industrially preferable that 50 mol% or more of all R⁴ groups is a methyl group.

R⁵ in the general formula (2) includes alkyl groups such as a methyl group, an ethyl group, a propyl group, a butyl group, a pentyl group, a hexyl group, a heptyl group, an octyl group, a decyl group, an undecyl group, a dodecyl group, etc. It is industrially preferable that 50 mol% or more of all R⁵ groups is a methyl group.

"p" is a number satisfying 0≤p≤200, preferably 0≤p≤50, more preferably 0≤p≤10. "q" is a number satisfying 1≤q≤200, preferably 1≤q≤50, more preferably 1≤q≤30, further preferably 1≤q≤10. "r" is a number satisfying 0≤r≤200, preferably 0≤r≤50, more preferably 0≤r≤30, further preferably 0≤r≤5, very preferably 0≤r≤1.

The kinematic viscosity at 25°C of the component (B) organohydrogenpolysiloxane is preferably 10,000 mm²/s or less, more preferably 1,000 mm²/s or less. When the kinematic viscosity is 10,000 mm²/s or less, it is possible to have high compatibility with the component (A), and obtain a particle having narrow particle size distribution in the inventive manufacturing method described later as well. The lower limit is not particularly limited, but it is preferable to be 1 mm²/s or more.

The component (B) is preferably an organohydrogenpolysiloxane having a solubility parameter value (SP value) of 7.5 or higher, which is represented by the following equation (5). $Δ = ρ ΣF / M$ (ρ is a specific weight of the organohydrogenpolysiloxane. "F" is the molecular cohesive energy constant ((cal·cm³)^{1/2}/mol) of atoms and functional groups. "M" is the molecular weight of the organohydrogenpolysiloxane.)

Such a component (B) can exhibit high compatibility (solubility) with the component (A) in the composition, and as a result, the liquid composition containing the components (A) and (B) can be a homogeneous curable composition. The upper limit of the SP value is not particularly limited, but can be 25 or less for example.

Further, the component (B) is more preferably a phenylorganohydrogenpolysiloxane which satisfies the following formula (6): $\left(p/p+q+r+2\right) \times 100 > 10$

Such a component (B) can exhibit high compatibility (solubility) with the component (A) in the composition, and as a result, the liquid composition containing the components (A) and (B) can be a homogeneous curable composition. The upper limit is not particularly limited, but the value of the above formula can be 50 or less for example.

In the liquid composition, the component (B) preferably contains a hydrogen atoms bonded to a silicon atom (hydrosilyl group: Si-H groups) of the component (B) in an amount of 0.1 to 5.0, more preferably 0.5 to 2.0, based on 1 alkenyl group of the component (A).

Here, at least one of: the number of alkenyl groups in the component (A); and the number of hydrogen atoms bonded to a silicon atom in the component (B) is at least 3 per molecule.

### [Component (C)]

The component (C) hydrosilylation-reaction catalyst may be well-known one which is used for hydrosilylation-reaction. For example, these can include, a single platinum group metal such as platinum (including platinum black), rhodium, palladium, etc.; chloroplatinic acid and chloroplatinate such as H₂PtC₁₄·kH₂O, H₂PtCl₆·kH₂O, NaHPtCl₆·kH₂O, KHPtCl₆·kH₂O, Na₂PtCl₆·kH₂O, K₂PtCl₄·kH₂O, PtCl₄·kH₂O, Na₂HPtCl₄·kH₂O, etc. (where, "k" in the formula is an integer from 0 to 6, preferably 0 or 6.); alcohol-modified chloroplatinic acid (see Specification of U.S. Patent No. 3220972); complexes of chloroplatinic acid and olefins (see Specifications of U.S. Patent No. 3159601, 3159662, and 3775452); platinum group metals, such as platinum black and palladium, supported on a carrier such as alumina, silica, carbon, etc.; rhodium-olefin complex; chlorotris (triphenylphosphine) rhodium (Wilkinson catalyst); a complex of vinyl group-containing siloxane with platinum, platinum chloride, chloroplatinic acid or chloroplatinate, especially a complex of platinum with vinyl group-containing disiloxane or vinyl group-containing cyclic siloxane.

The hydrosilylation-reaction catalyst may be blended in an amount which is effective to promote hydrosilylation-reaction. When the blended amount of the catalyst is appropriate, it is possible to prevent oxidizing a polyether moiety of a surfactant described later and suppress odor generation. Further, it is possible to prevent darkening an obtained silicone rubber spherical particle. Specifically, the amount is preferably 0.1 to 100 ppm (mass), more preferably 0.5 to 50 ppm, further preferably 1 to 30 ppm, in terms of the mass of the platinum group metal in the catalyst, based on the total amount of the polysiloxane and the organohydrogenpolysiloxane.

### [Component (D)]

In order to control curability and reactivity by the component (C) hydrosilylation-reaction catalyst, the inventive liquid composition for silicone rubber spherical particle can contain an additive component (D). That is, it is possible to further contain a reaction control agent, etc. The reaction control agent is not particularly limited as long as it is a compound having an effect to suppress curing against the platinum group metal-based catalyst in the component (C), and conventionally known one can be used. The examples can include various organic nitrogen compounds, organic phosphorus compounds, acetylene compounds, oxime compounds, organic chloro compounds, diallyl maleate, triallyl isocyanurate, etc.

Examples of the component (D) can include acetylene-based alcohols such as 3-methyl-1-butyn-3-ol, 3,5-dimethyl-1-hexyn-3-ol, 3-methyl-1-pentyn-3-ol, 2-phenyl-3-butyn-2-ol, 1-ethynylcyclohexanol, etc.; acetylenic compounds such as 3-methyl-3-penten-1-yne, 3,5-dimethyl-3-hexen-1-yne, etc.; reaction products of these acetylenic compounds and alkoxysilanes, siloxanes, or hydrogensilanes; vinylsiloxanes such as cyclic tetramethylvinylsiloxanes, etc.; organic nitrogen compounds such as benzotriazole, etc.; other organic phosphorus compounds; oxime compounds; organochloro compounds; etc.

### [Other Blended Components]

The inventive liquid composition for silicone rubber spherical particle optionally contains appropriate amounts of other components in addition to the components (A) to (C) and the optional component (D). Examples of the other components can include the following, and they can be used alone or in appropriate combination of two or more kinds.

### [Antioxidant]

In the inventive liquid composition, an alkenyl group in the component (A), that is, a carbon-carbon double bond remains unreacted in some cases. In such a case, it is possible to prevent coloring, degradation of the component (A) itself, etc., by adding an antioxidant as necessary.

As the antioxidant, any conventionally known antioxidant can be used. Examples thereof include 2,6-di-t-butyl-4-methylphenol, 2,5-di-t-amylhydroquinone, 2,5-di-t-butylhydroquinone, 4,4'-butylidenebis(3-methyl-6-t-butylphenol), 2,2'-methylenebis(4-methyl-6-t-butylphenol), 2,2'-methylenebis(4-ethyl-6-t-butylphenol), etc.

When an antioxidant is used, the blended amount thereof can be an amount effective as an antioxidant, and is not particularly limited. Specifically, for example, it is usually preferable to be 10 to 10,000 ppm (mass), more preferably 100 to 1,000 ppm, based on the total mass of the components (A) and (B). When the contained amount is within such ranges, antioxidation ability is sufficiently exhibited, so that it is possible to obtain a cured material in which coloring, clouding, degradation by oxidation, etc. do not occur.

### [Components other than the above]

The inventive liquid composition for silicone rubber spherical particle may further contain a silicone oil, an inorganic powder, an organic powder, etc.

### [Silicone Rubber Spherical Particle]

The inventive silicone rubber spherical particle is a cured material of the above liquid composition for a silicone rubber spherical particle by addition reaction.

The inventive silicone rubber spherical particle has a volume average particle size of 0.5 to 100 µm, preferably 1 to 40 µm, more preferably 1 to 10 µm. When the volume average particle size is the above lower limit or more, the obtained silicone composite particle has low agglomeration, disperses easily to primary particles, and therefore, has good dry or smooth feeling. When the volume average particle size is the above upper limit or less, the obtained silicone composite particle has good dry or smooth feeling, and no rough feeling. Note that the volume average particle size is measured by an electric resistance method when 1 µm or more, and by a laser diffraction/scattering method when less than 1 µm, in accordance with the particle size of the silicone composite particle.

The "spherical" of the silicone rubber spherical particle is preferably a true spherical shape. This means that its aspect ratio (length of major axis/length of minor axis) may be 1 to 4 on average, preferably 1 to 2, more preferably 1 to 1.6, and further preferably 1 to 1.4. The shape of the silicone rubber spherical particle can be confirmed, for example, by optical microscopy when the size of particle size in aqueous dispersion is about 1 µm or more. When water is removed, the shape can be confirmed by electron microscopy observation even when the particle size is 1 µm or less.

The rubber (a cured material of the inventive liquid composition for silicone rubber spherical particle by addition reaction) constituting the silicone rubber spherical particle is preferably not sticky, and preferably has a rubber hardness of 5 to 90, more preferably 10 to 70 as measured by Type A Durometer according to JIS K 6253. When the rubber hardness is the lower limit or more, the obtained silicone composite particle has low agglomeration, disperses easily to primary particles, and therefore, has good dry or smooth feeling. Further, when the rubber hardness is the above upper limit or less, it becomes easy to obtain a silicone composite particle according to the inventive manufacturing method described later.

### [Silicone Composite Particle]

The inventive silicone composite particle contains the inventive silicone rubber spherical particle, and spherical or hemispherical polyorganosilsesquioxane or silica adhered on the surface of the silicone rubber spherical particle.

The inventive silicone composite particle can be expressed to be the inventive silicone rubber spherical particle having the spherical or hemispherical polyorganosilsesquioxane or silica adhered on its surface. The spherical or hemispherical polyorganosilsesquioxane or silica may be adsorbed on the surface of the inventive silicone rubber spherical particle. The silicone composite particle is improved in flowability, non-agglomeration, light-scattering ability, etc. as powder by being adhered with the spherical polyorganosilsesquioxane or silica.

### [Polyorganosilsesquioxane]

The shape of the polyorganosilsesquioxane in the silicone composite particle is preferably spherical (e.g., true spherical shape) or hemispherical. The spherical polyorganosilsesquioxane preferably has a particle size of 10 to 500 nm, more preferably 20 to 200 nm. When the polyorganosilsesquioxane has a particle size of 10 nm or more, sufficient light-scattering ability can be obtained. Meanwhile, when the particle size is 500 nm or less, the touch of the obtained composite particle is excellent, and sufficient light-scattering ability can be achieved. Here, the particle size of the polyorganosilsesquioxane is preferably smaller than the particle size of the silicone rubber spherical particle.

The polyorganosilsesquioxane can adhere to all or part of the surface of the silicone rubber spherical particle. Specifically, the polyorganosilsesquioxane may adhere to the surface sparsely or may adhere to the surface with leaving no spaces, but from the viewpoint to obtain a silicone composite particle having excellent light-scattering property, adhesion density is preferably high. Note that the shape and particle size of the polyorganosilsesquioxane and the adhesion density at the surface of the silicone rubber spherical particle can be confirmed by electron microscopy observation of the obtained composite particles.

The above polyorganosilsesquioxane is, for example, a resinous solid in which units shown by R⁶SiO_{3/2} are crosslinked in a three-dimensional network.

The R⁶ represents a substituted or unsubstituted monovalent hydrocarbon group having 1 to 20 carbon atoms. Examples of the R⁶ can include alkyl groups such as a methyl group, an ethyl group, a propyl group, a butyl group, a pentyl group, a hexyl group, a heptyl group, an octyl group, a decyl group, an undecyl group, a dodecyl group, a tetradecyl group, a pentadecyl group, a hexadecyl group, a heptadecyl group, an octadecyl group, a nonadecyl group, an icosyl group, etc.; aryl groups such as a phenyl group, a tolyl group, a naphthyl group, etc.; aralkyl groups such as a benzyl group, phenethyl group, etc.; alkenyl groups such as a vinyl group, an allyl group, etc.; cycloalkyl groups such as a cyclopentyl group, a cyclohexyl group, a cycloheptyl group, etc.; hydrocarbon groups in which some or all of the hydrogen atoms bonded to the carbon atoms of these functional groups are substituted with atoms such as halogen atoms (fluorine, chlorine, bromine, and iodine atoms) and/or substituents such as an amino group, an acryloxy group, a methacryloxy group, an epoxy group, a glycidoxy group, a carboxy group, etc.

In order to make the polyorganosilsesquioxane adhere to the surface of the silicone rubber spherical particle by the inventive manufacturing method described later, 50 mol% or more of the R⁶s are preferably a methyl group, a vinyl group, or a phenyl group, more preferably 80 mol% or more, and further preferably 90 mol% or more, in view of reactivity etc.

The amount of the polyorganosilsesquioxane adhered to the surface of the silicone rubber spherical particle is preferably 1 to 50 parts by mass, more preferably 2 to 25 parts by mass, based on 100 parts by mass of the silicone rubber spherical particle. When the amount of the polyorganosilsesquioxane is 1 part by mass or more, the obtained silicone composite particle can exhibit sufficient light-scattering ability, and in addition, can exhibit a dry touch. When the amount of the polyorganosilsesquioxane is 50 parts by mass or less, the obtained composite particles can exhibit a sufficiently soft touch.

The polyorganosilsesquioxane may contain at least one selected from the group consisting an R⁶₂SiO_{2/2} unit, an R⁶₃SiO_{1/2} unit, and an SiO_{4/2} unit at any proportion besides the R⁶SiO_{3/2} unit. In such a polyorganosilsesquioxane, the content ratio of the R⁶SiO_{3/2} unit is preferably within a range of 70 to 100 mol%, more preferably 80 to 100 mol% of all siloxane units.

### [Silica]

The silica is, for example, obtained by a hydrolysis-polycondensation reaction of a tetraalkoxysilane and has a structure formed of a SiO₂ unit, and can also contain alkoxy groups originating from raw material tetraalkoxysilanes or silanol groups that did not undergo a condensation reaction.

The shape of the silica is preferably spherical (for example, true spherical) or hemispherical. In addition, the spherical silica preferably has a particle size of 500 nm or less. Here, the particle size of the silica is preferably smaller than the particle size of the silicone rubber spherical particle.

The silica adheres to all or part of the surface of the silicone rubber spherical particle. Specifically, the silica may adhere to the surface sparsely or may adhere to the surface with leaving no spaces, but the surface is preferably covered with almost no spaces, and the adhesion density is preferably high. Note that the shape and particle size of the coating silica can be confirmed by observing the surface of the composite particles with an electron microscope.

### [Method for Manufacturing Silicone rubber Spherical Particle]

In addition, the present invention provides a method for manufacturing the inventive silicone rubber spherical particle described above. This method includes the steps of:
(i) obtaining an O/W type emulsion including an aqueous phase component and an oil phase component including a liquid composition containing the components (A) to (C); and
(ii) obtaining an aqueous dispersion of a silicone rubber spherical particle by curing the liquid composition in an oil phase in the O/W type emulsion obtained in the step (i) through addition reaction.

The inventive silicone rubber spherical particle can, for example, be obtained by the following method. However, the inventive silicone rubber spherical particle may also be manufactured by other methods.

### [Step (i)]

Step (i) is a step of obtaining an O/W type emulsion (oil-in-water type emulsion) including an aqueous phase component and an oil phase component including a liquid composition containing the above components (A) to (C).

In the step (i), for example, the O/W type emulsion can be obtained by adding a surfactant and water to the liquid composition (an oil phase) containing the components (A) and (B), and performing an emulsification treatment. The method for adding the component (C) will be described later.

The surfactant is used as an "emulsifier" to form an emulsion by emulsification through mixing the composition containing the components (A) and (B) with water. The surfactant is not particularly limited, and examples include nonionic surfactants, anionic surfactants, cationic surfactants, amphoteric surfactants, etc. These surfactants can be used alone, or in an appropriate combination of two or more kinds.

Examples of the nonionic surfactants can include polyoxyethylene alkyl ether, polyoxyethylene polyoxypropylene alkyl ether, polyoxyethylene alkyl phenyl ether, polyethylene glycol-fatty acid ester, sorbitan-fatty acid ester, polyoxyethylene sorbitan-fatty acid ester, polyoxyethylene sorbit-fatty acid ester, glycerin-fatty acid ester, polyoxyethylene glycerin-fatty acid ester, polyglycerin-fatty acid ester, propylene glycol-fatty acid ester, polyoxyethylene castor oil, polyoxyethylene hydrogenated castor oil, polyoxyethylene hydrogenated castor oil-fatty acid ester, polyoxyethylene alkylamine, polyoxyethylene fatty acid amide, polyoxyethylene-modified organopolysiloxane, polyoxyethylene-polyoxypropylene-modified organopolysiloxane, etc.

Examples of the anionic surfactants can include alkyl sulfate ester salt, polyoxyethylene alkyl ether sulfate ester salt, polyoxyethylene alkyl phenyl ether sulfate ester salt, alkylbenzene sulfonate, polyoxyethylene alkyl phenyl ether sulfonate, α-olefin sulfonate, alkyl naphthalene sulfonate, alkyl diphenyl ether disulfonate, dialkyl sulfosuccinate, monoalkyl sulfosuccinate, polyoxyethylene alkyl ether sulfosuccinate, fatty acid salt, polyoxyethylene alkyl ether carboxylate, N-acylamino acid salt, monoalkyl phosphate ester salt, dialkyl phosphate ester salt, polyoxyethylene alkyl ether phosphate ester salt, etc.

Examples of the cationic surfactants can include alkyltrimethylammonium salt, dialkyldimethylammonium salt, polyoxyethylene alkyl dimethyl ammonium salt, dipolyoxyethylene alkyl methyl ammonium salt, alkylbenzyl dimethyl ammonium salt, monoalkylamine salt, monoalkylamidoamine salt, etc.

Examples of the amphoteric surfactants can include alkyl dimethylamine oxide, alkyl dimethyl carboxybetaine, alkylamidopropyl dimethylcarboxybetaine, alkylhydroxysulfobetaine, etc.

The surfactants may be used alone, or in an appropriate combination of two or more kinds. In particular, nonionic surfactants are preferable, because the liquid composition containing the components (A) and (B) can be emulsified with a small amount of surfactant, and because a fine silicone rubber spherical particle having a narrow particle size distribution can be obtained.

The amount of the surfactants to be used is preferably 0.01 to 20.0 parts by mass, more preferably 0.05 to 5.0 parts by mass, based on 100 parts by mass of the liquid composition (an oil phase) containing the components (A) and (B). When the used amount is 0.01 to 20.0 parts by mass, a stable emulsion can be formed, and it is possible to obtain a fine silicone rubber spherical particle having a narrow particle size distribution.

The O/W type emulsion can also further contain the component (C) in addition to the components (A) and (B).

The component (C) is a hydrosilylation-reaction catalyst (e.g., a platinum group metal-based catalyst), and may be added to the O/W type emulsion containing the components (A) and (B) in an oil phase. When, however, the dispersibility of the catalyst in water is low, the catalyst in a state of being dissolved in a surfactant is preferably added to the emulsion. In this event, the surfactant to be used may be those described above, and in particular, a nonionic surfactant is preferable.

The component (C) may be added and mixed beforehand in the liquid composition containing the components (A) and (B). In this case, the emulsification is preferably performed with taking reactivity, temperature, and reaction time into consideration so that the liquid composition is not be cured in a stage before the emulsification step is completed. In addition, a reaction control agent may be blended in the composition in advance as necessary.

Note that the component (C) may be added to the liquid composition at any point in time, as long as the component (C) is added before the addition-curing reaction.

The emulsification method can be performed using a common emulsifying and dispersing apparatus, and is not limited thereto. Examples of the emulsifying and dispersing apparatus can include: high-speed rotary shear stirrers such as a homomixer, etc.; high-speed rotary centrifugal stirrers such as HOMOGENIZING DISPER, etc.; high-pressure jetting emulsifying and dispersing apparatuses such as a homogenizer, etc.; a colloid mill, an ultrasonic emulsifier, etc.

### [Step (ii)]

Step (ii) is a step of obtaining an aqueous dispersion of a silicone rubber spherical particle by curing the liquid composition in an oil phase in the O/W type emulsion obtained in the step (i) through addition reaction. That is, step (ii) is a step of curing the components (A) and (B) in the oil phase component in the O/W type emulsion obtained in the step (i) in the presence of the component (C) by an addition-curing reaction and obtaining an aqueous dispersion of silicone rubber spherical particle.

The aqueous dispersion of the silicone rubber spherical particle can be manufactured by, for example, adding the component (C) to the O/W type emulsion (not containing the component (C)) obtained by the above-described emulsification method and subjecting the components (A) and (B) contained in the oil phase component of the emulsion to an addition-curing reaction.

Alternatively, the aqueous dispersion can also be manufactured by obtaining the O/W type emulsion from the liquid composition containing the components (A) to (C) as described above and subjecting the components (A) and (B) contained in the oil phase component of the emulsion to an addition-curing reaction.

The addition-curing reaction may be performed under room temperature, but when the reaction is not completed, the reaction may be performed under heating at lower than 100°C. As temperature conditions, 20 to 60°C is preferable, and 30 to 50°C is more preferable. When the reaction temperature is 20 to 60°C, the curing reaction progresses sufficiently and stability of the emulsion can also be maintained, so that the target silicone rubber spherical particle can be obtained sufficiently.

### [Step (iii)]

Step (iii) is a step of removing water present in an external phase and in the silicone rubber spherical particle, from the aqueous dispersion of the silicone rubber spherical particle obtained in the above step (ii). This step is optional, and the aqueous dispersion of the silicone rubber spherical particle may be used without removing water.

In a case where a silicone composite particle is not to be formed, the silicone rubber spherical particle is obtained in this step (iii) as powder. Specific methods are the same as the step, which is described later, of obtaining a silicone composite particle as powder. For example, by volatilizing and removing liquid, water, etc., which is impregnated in the silicone rubber spherical particle, through heat treatment under atmospheric pressure or reduced pressure. Thus, the water present in an external phase and in the silicone rubber spherical particle are removed to obtain a silicone rubber spherical particle as powder.

Thus, as one embodiment, the inventive silicone rubber spherical particle can be obtained by the following method. Firstly, a surfactant and water are added to a liquid composition made of an oil phase containing components (A) and (B), in some cases, after adding the component (C), and then an emulsification treatment is performed to form an emulsion. Subsequently, the components (A) and (B) are subjected to an addition-curing reaction in the presence of the component (C). An aqueous dispersion of the target structure (rubber spherical particle) can be obtained by such a crosslinking and rubber-forming method. Silicone rubber spherical particle can be obtained by removing water in the external phase and water in the silicone rubber spherical particle from this aqueous dispersion.

As another embodiment, the inventive silicone rubber spherical particle can be obtained also by the following method. Firstly, a liquid composition containing the component (A), the component (B), and the additive component (D) is prepared. The component (C) is added to the liquid composition stored at a low temperature (20°C or lower), and then immediately a surfactant and water are added and an emulsification treatment is performed to obtain an emulsion. Next, the emulsion is subjected to an addition-curing reaction by heating and aging (30°C or higher). An aqueous dispersion of the target structure (rubber spherical particle) can be obtained by such a crosslinking and rubber-forming method. Finally, the silicone rubber spherical particle can be obtained by removing water in the external phase and water in the silicone rubber spherical particle from this aqueous dispersion.

### [Method for Manufacturing Silicone Composite Particle]

In addition, the present invention provides a method for manufacturing the above-described inventive silicone composite particle. This method includes the steps of:
(i) obtaining an O/W type emulsion containing an aqueous phase component and an oil phase component including a liquid composition containing the components (A) to (C);
(ii) obtaining an aqueous dispersion of a silicone rubber spherical particle by curing the liquid composition in oil phase in the O/W type emulsion obtained in the step (i) through addition reaction; and
(iv) subjecting organotrialkoxysilane or tetraalkoxysilane to hydrolysis and polycondensation in the presence of the silicone rubber spherical particle obtained in the step (ii), water, and an alkaline substance, to make a spherical or hemispherical polyorganosilsesquioxane or silica adhere to a surface of the silicone rubber spherical particle.

The inventive silicone composite particle can be obtained by the following method, for example. However, the inventive silicone composite particle may be manufactured also by other methods, and the method is not limited thereto.

### [Step (i)]

Step (i) of the inventive method for manufacturing the silicone composite particle is the same as the step (i) of the method for manufacturing the silicone rubber spherical particle described above.

By setting the amount of the surfactant optionally used in step (i) to 0.01 to 20.0 parts by mass based on 100 parts by mass of the liquid composition (oil phase) containing the components (A) and (B), a stable emulsion can be formed, and a silicone rubber spherical particle that are fine and have a narrow particle size distribution can be sufficiently obtained. In addition, by setting the amount of the surfactant used within the above range, sufficient amounts of polyorganosilsesquioxane or silica can be adhered to the surfaces of the silicone rubber spherical particle, according to the inventive manufacturing method.

### [Step (ii)]

Step (ii) of the inventive method for manufacturing the silicone composite particle is the same as the step (ii) of the method for manufacturing the silicone rubber spherical particle described above.

Note that in the step (ii) of this method, the aqueous dispersion can also be manufactured in the form of an aqueous dispersion of a silicone rubber spherical particle impregnated with organopolysiloxane. In addition, the component (C) may be added at any time as long as it is before the addition-curing reaction.

Examples of the liquid that is impregnated to the silicone rubber spherical particle can include organopolysiloxane. Examples of the organopolysiloxane can include those that can be shown by an average composition formula R⁷ₐSiO_{(4-a)/2}. In the formula, R⁷ represents an unsubstituted or substituted monovalent hydrocarbon group having 1 to 20 carbon atoms, and "a" is a positive number satisfying 1≤a≤3, preferably 0.5≤a≤2.3.

Examples of the R⁷ can include alkyl groups such as a methyl group, an ethyl group, a propyl group, a butyl group, a pentyl group, a hexyl group, a heptyl group, an octyl group, a decyl group, an undecyl group, a dodecyl group, a tetradecyl group, a pentadecyl group, and a hexadecyl group, etc.; aryl groups such as a phenyl group, a naphthyl group, etc.; aralkyl groups such as a benzyl group, a phenethyl group, etc.; alkenyl groups such as a vinyl group, an allyl group, etc.; cycloalkyl groups such as a cyclopentyl group, a cyclohexyl group, a cycloheptyl group, etc.; hydrocarbon groups in which some or all of the hydrogen atoms bonded to the carbon atoms of these functional groups are substituted with atoms such as halogen atoms and/or substituents such as an amino group, an acryloxy group, a methacryloxy group, an epoxy group, a glycidoxy group, a mercapto group, a carboxy group, etc. Note that industrially, 50 mol% or more of all the R⁷ groups are preferably methyl groups.

The organopolysiloxane has a viscosity of 100,000 mm²/s or less preferably at 25°C, more preferably 10,000 mm²/s or less. When the viscosity is 100,000 mm²/s or less, it is possible to obtain the silicone rubber spherical particle having a sufficiently narrow particle size distribution by this manufacturing method. Note that the viscosity indicates a value measured by an Ostwald viscometer at 25°C.

### [Step (iv)]

Step (iv) is a step of subjecting an organotrialkoxysilane or a tetraalkoxysilane to hydrolysis and polycondensation in the presence of the silicone rubber spherical particle obtained in the step (ii), water, and an alkaline substance to make a spherical or hemispherical polyorganosilsesquioxane or silica adhere to the surface of the silicone rubber spherical particle.

The aqueous dispersion (that is, the dispersion containing the silicone rubber spherical particle and water) obtained in step (ii) may be used in step (iv) as it is, or water may be further added as necessary. 1 to 150 parts by mass of the silicone rubber spherical particle are preferably contained, more preferably 5 to 70 parts by mass, based on 100 parts by mass of water. When the amount of the silicone rubber spherical particle is 1 to 150 parts by mass based on 100 parts by mass of water, adhesion of the polyorganosilsesquioxane or silica to the surfaces of the silicone rubber spherical particle can be performed sufficiently while preventing degradation of the production efficiency of the composite particle, and moreover, aggregation or fusion of the particles can be prevented.

The alkaline substance acts as a catalyst to make organotrialkoxysilane or tetraalkoxysilane undergo hydrolysis and polycondensation reaction. The alkaline substance is not particularly limited, and may be anything that allows hydrolysis and polycondensation reaction of the organotrialkoxysilane or the tetraalkoxysilane to proceed. The alkaline substance can be used alone, or in an appropriate combination of two or more kinds. The alkaline substance may be added as it is, or may be added as an aqueous solution thereof.

Examples of the alkaline substance can include alkali metal hydroxide such as potassium hydroxide, sodium hydroxide, lithium hydroxide, etc.; alkaline-earth metal hydroxide such as calcium hydroxide, barium hydroxide, etc.; alkali metal carbonate such as potassium carbonate, sodium carbonate, etc.; ammonia; tetraalkylammonium hydroxide such as tetramethylammonium hydroxide, tetraethylammonium hydroxide, etc.; amines such as monomethylamine, monoethylamine, monopropylamine, monobutylamine, dimethylamine, diethylamine, trimethylamine, triethanolamine, ethylenediamine, etc. In particular, ammonia is the most preferable because ammonia can be removed easily from the obtained powder of silicone composite particle by volatilization. Note that as the ammonia, a commercially available aqueous ammonia solution can be used.

The amount of the alkaline substance to be added is preferably an amount at which the pH of the aqueous dispersion of the silicone rubber spherical particle preferably falls within the range of 9.0 to 13.0, more preferably 9.5 to 12.5. When the pH is within the above ranges, the hydrolysis and polycondensation reaction of organotrialkoxysilane or tetraalkoxysilane can proceed sufficiently, and a sufficient amount of the obtained polyorganosilsesquioxane or silica can adhere to the surface of the silicone rubber spherical particle.

As a method for adding the alkaline substance, the alkaline substance may be blended in the aqueous dispersion of silicone rubber spherical particle in advance before adding the organotrialkoxysilane or the tetraalkoxysilane, or may be blended after adding the organotrialkoxysilane or the tetraalkoxysilane.

Examples of the organotrialkoxysilane can include those shown by R⁷Si(OR⁸)₃. In the formula, R⁷ represents an unsubstituted or substituted monovalent hydrocarbon group having 1 to 20 carbon atoms, and is as in the description above. R⁸ represents an unsubstituted monovalent hydrocarbon group having 1 to 6 carbon atoms. Examples of R⁸ can include a methyl group, an ethyl group, a propyl group, a butyl group, a pentyl group, a hexyl group, etc., but, in view of reactivity, a methyl group is preferable.

When at least one of an R⁶₂SiO_{2/2} unit, an R⁶₃SiO_{1/2} unit, and an SiO_{4/2} unit is further introduced into the polyorganosilsesquioxane, at least one out of R⁷₂Si(OR⁸)₂, R⁷₃SiOR⁸, and Si(OR⁸)₄ may be added. The content ratio of the R⁷Si(OR⁸)₃ is preferably 70 to 100 mol%, more preferably 80 to 100 mol%, of all the raw materials, for example.

The amount of the organotrialkoxysilane added is preferably an amount at which the amount of the polyorganosilsesquioxane is 1 to 50 parts by mass, more preferably 2 to 25 parts by mass based on 100 parts by mass of the silicone rubber spherical particle.

Examples of the tetraalkoxysilane can include those shown by Si(OR⁸)₄. In the formula, R⁸ represents an unsubstituted monovalent hydrocarbon group having 1 to 6 carbon atoms, and is as in the above description. R⁸ is preferably a methyl group or an ethyl group in view of reactivity. That is, tetramethoxysilane or tetraethoxysilane is more preferable. Tetramethoxysilane is the most preferable. Note that as the tetraalkoxysilane, a tetraalkoxysilane in which some or all of the alkoxy groups have been subjected to hydrolysis or some of the alkoxy groups have been subjected to condensation may be used.

The method for adding the organotrialkoxysilane or tetraalkoxysilane is preferably performed under stirring using ordinary stirrers having propeller blades, planar blades, etc. Stirring is continued after the addition of the organotrialkoxysilane or tetraalkoxysilane until the hydrolysis and condensation reaction of the alkoxysilane is completed.

When the organotrialkoxysilane or tetraalkoxysilane is to be added after blending the alkaline substance to the aqueous dispersion of silicone rubber spherical particle, the alkoxysilane may be added at once, but is preferably added gradually over time.

The temperature of the reaction liquid during the addition is preferably 0 to 40°C, more preferably 0 to 30°C. When the temperature is within the above ranges, the polyorganosilsesquioxane or silica can be well adhered to the surface of the silicone rubber spherical particle. In order to complete the hydrolysis and condensation reaction of the alkoxysilane, the reaction can be performed under room temperature or under heating at about 40 to 100°C, and an alkaline substance may also be added appropriately.

The temperature during the condensation reaction is preferably 0 to 40°C, more preferably 0 to 30°C. When the temperature is within the above ranges, the polyorganosilsesquioxane or silica can be well adhered to the surface of the silicone rubber spherical particle. Until the polyorganosilsesquioxane or silica is produced, the reaction solution should be allowed to stand still or kept in a very slowly stirred state. Note that the time to leave the reaction liquid standing is preferably within the range of 10 minutes to 24 hours. After that, in order to complete the condensation reaction, an alkaline substance may be additionally added, or the reaction liquid may be heated at 40 to 100°C.

In the step of manufacturing the silicone composite particle, a surfactant, a water-soluble polymer compound, etc. may be added to the above-described aqueous dispersion in advance for the purpose of controlling the adhesive property of the polyorganosilsesquioxane or silica and the size of the obtained composite particles.

A surfactant to be further optionally added to the aqueous dispersion of the silicone rubber spherical particle is not particularly limited, and the above-described nonionic surfactants etc. may be used. Note that the surfactant to be added may be the same as or different from the surfactant contained in the aqueous dispersion of the silicone rubber spherical particle. Further, the surfactant can be used alone or in an appropriate combination of two or more kinds.

The amount of the surfactant to be added is not particularly limited, but is preferably 0.01 to 20.0 parts by mass, more preferably 0.05 to 5.0 parts by mass, based on 100 parts by mass of the aqueous dispersion of the silicone rubber spherical particle.

The water-soluble polymer compound to be optionally added to the aqueous dispersion of silicone rubber spherical particle is not particularly limited, and one kind thereof may be used, or an appropriate combination of two or more kinds thereof may be used. Examples of the water-soluble polymer compound can include nonionic water-soluble polymer compounds, anionic water-soluble polymer compounds, cationic water-soluble polymer compounds, amphoteric water-soluble polymer compounds, etc.

Examples of the nonionic water-soluble polymer compounds can include a copolymer of vinyl alcohol and vinyl acetate, an acrylamide polymer, a vinyl pyrrolidone polymer, a copolymer of vinyl pyrrolidone and vinyl acetate, polyethylene glycol, an isopropyl acrylamide polymer, a methyl vinyl ether polymer, starch, methyl cellulose, hydroxyethyl cellulose, hydroxypropyl cellulose, guar gum, xanthan gum, etc.

Examples of the anionic water-soluble polymer compounds can include a sodium acrylate polymer, a copolymer of sodium acrylate and sodium maleate, a copolymer of sodium acrylate and acrylamide, a sodium styrenesulfonate polymer, a copolymer of sodium polyisoprenesulfonate and styrene, a sodium naphthalenesulfonate polymer, carboxymethyl starch, starch phosphate, carboxymethyl cellulose, sodium alginate, arabia gum, carrageenan, chondroitin sulfate sodium, sodium hyaluronate, etc.

Examples of the cationic water-soluble polymer compounds can include a dimethyldiallylammonium chloride polymer, a vinylimidazoline polymer, a methylvinylimidazolium chloride polymer, an ethyltrimethylammonium acrylate chloride polymer, an ethyltrimethylammonium methacrylate chloride polymer, an acrylamidopropyltrimethylammonium chloride polymer, a methacrylamidopropyltrimethylammonium chloride polymer, an epichlorohydrin-dimethylamine copolymer, an ethyleneimine polymer, a quaternized product of an ethyleneimine polymer, an allylamine hydrochloride polymer, polylysine, cationic starch, cationic cellulose, chitosan, derivatives thereof obtained by copolymerizing monomers having a nonionic group or an anionic group to these, etc.

Examples of the amphoteric water-soluble polymer compounds can include a copolymer of ethyltrimethylammonium acrylate chloride, acrylic acid, and acrylamide, a copolymer of ethyltrimethylammonium methacrylate chloride, acrylic acid, and acrylamide, a Hofmann degradation product of an acrylamide polymer, etc.

When a water-soluble polymer compound is used, the blended amount thereof is preferably 0.01 to 50.0 mass%, more preferably 0.1 to 20.0 mass%, and further preferably 0.3 to 10.0 mass%, in the emulsion obtained by the manufacturing process of the present invention.

### [Step of Removing Liquid Impregnating Silicone Composite Particle by Volatilization]

The silicone composite particle can be obtained as a powder by making a polyorganosilsesquioxane or silica adhere to the surfaces of the silicone rubber spherical particle, and then removing the liquid and water impregnating the silicone rubber spherical particle by volatilization.

The step of removing the liquid and water with which the silicone composite particle is impregnated by volatilization may follow a conventionally known method. When the impregnating liquid has a high boiling point and cannot be removed by volatilization or when it is desired to remove the liquid by volatilization at a low temperature, cleaning substitution may be performed using a low-boiling-point solvent or the like in a stage before the removal step.

As the solvent used in the cleaning substitution, a conventionally known solvent can be used. Examples thereof include aliphatic hydrocarbons such as pentane, hexane, heptane, octane, nonane, decane, undecane, dodecane, hexadecane, octadecane, cyclohexane, etc.; aromatic hydrocarbons such as benzene, toluene, ethylbenzene, xylene, etc.; alcohols such as butanol, hexanol, cyclohexanol, benzyl alcohol, etc.; halogenated hydrocarbons such as chloroform, carbon tetrachloride, ethyl chloride, chlorobenzene, etc.; esters such as ethyl acetate, isopropyl acetate, ethylacetoacetate, benzyl acetate, etc.; ethers such as ethyl ether, butyl ether, tetrahydrofuran, 1,4-dioxane, etc.; ketones such as acetone, methyl ethyl ketone, cyclohexanone, methyl amyl ketone, diisobutyl ketone, etc.

Examples of the treatment operation in the step of obtaining the particles as a powder can include a method of condensing the dispersion beforehand by employing a method such as filtration separation, centrifugation, decantation, etc. Specifically, for example, the dispersion/condensation product is added with a solvent and mixed using an ordinary stirrer with propeller blades, planar blades, or the like, and then subjected to solid-liquid separation by a method such as the filtration separation, centrifugation, decantation, or the like.

The removal by volatilization of liquid impregnated in the silicone composite particle, the solvent substituted by cleaning, or water can be performed by a heat treatment under normal pressure or under reduced pressure. Examples include a method of removing the water by leaving the dispersion to stand under heating; a method of removing the liquid by stirring and fluidizing the dispersion under heating; a method of spraying the dispersion into such a hot air flow as a spray dryer; a method of using a flow of hot medium; etc. Note that a method of condensing the dispersion may also be adopted as a pre-treatment of these operation.

When the powder of the silicone composite particle has aggregated, examples of a method for disintegrating the aggregates can include a method using a pulverizer such as a jet mill, a ball mill, a hammer mill, etc.

Step (iii) of the method for manufacturing a silicone rubber spherical particle described above can also be performed by such methods in the above, for example.

As one embodiment, the inventive silicone composite particle can be obtained, for example, by a manufacturing method including the following steps.
(I) a step of adding a surfactant and water to a composition that is an oil phase component containing the components (A) and (B) and performing an emulsification treatment to form an emulsion, and then obtaining an aqueous dispersion of silicone rubber spherical particle by an addition-curing reaction of the components (A) and (B) in the presence of the component (C); and
(II) a step of subjecting an organotrialkoxysilane or a tetraalkoxysilane to hydrolysis and a polycondensation reaction in the presence of the aqueous dispersion of silicone rubber spherical particle obtained in step (I), water, and an alkaline substance to make a polyorganosilsesquioxane or silica adhere to the surface of the silicone rubber spherical particle.

As another embodiment, the inventive silicone composite particle can be obtained, for example, also by a manufacturing method including the following steps.
(I') a step of storing a composition containing the components (A), (B), and (D) under a low temperature (20°C or lower), adding the component (C) thereto, then immediately adding a surfactant and water and performing an emulsification treatment to form an emulsion, and then heating and aging (30°C or higher) the emulsion to obtain an aqueous dispersion of silicone rubber spherical particle by an addition-curing reaction of the components (A) and (B);
(II') a step of subjecting organotrialkoxysilane or tetraalkoxysilane to hydrolysis and a polycondensation reaction in the presence of the aqueous dispersion of silicone rubber spherical particle obtained in (I'), water, and an alkaline substance to make polyorganosilsesquioxane or silica adhere to the surface of the silicone rubber spherical particle.

### EXAMPLE

Hereinafter, the present invention will be described in detail with reference to Examples and a Comparative Example, but the present invention is not limited thereto. In the following examples, kinematic viscosity is measured at 25°C, and [%] used for concentration and content ratio means [mass%].

### [Example]

### [Synthesis Example 1 of Component (A)]

300 g of carbinol-modified polysiloxane (the following formula (7)), 150 g of toluene, and 16.8 g of triethylamine are put into a separable flask having a capacity of 1 liter equipped with an agitator, a dropping funnel, a thermometer, and a cooling tube, and the mixture was stirred for a certain time at room temperature, and then 29.6 g of undecenoyl chloride (weight ratio satisfying 1.1 of acid chloride relative to 1 of hydroxyl group in the carbinol-modified silicone) was dropped to the mixture with using a dropping funnel under nitrogen gas atmosphere (flow). After dropping, the mixture was heated to 40 to 60°C and subjected to aging for 2 hours to promote reaction. After aging, 200 g of water and 100 g of toluene was added to the mixture, and then extraction treatment was performed with using a separatory funnel. After extraction, the oil phase was subjected to washing treatment, twice with ion-exchanged water and once with saturated saline solution, next added with magnesium sulfate, activated carbon, and KYOWAAD 700 (manufactured by Kyowa Chemical Industry Co., Ltd.) in amount of about 10 g each, and then shaken for 2 hours. After shaking, the magnesium sulfate, the activated carbon, and the KYOWAAD 700 were removed with using a pressure filter, finally the solvent is distilled away under a condition of at 60°C, 10 mmHg or less, and for 2 hours, and the objective component (A), polysiloxane (a-1) having two alkenyl groups per molecule, was obtained.

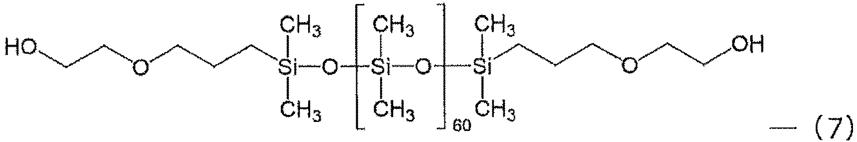

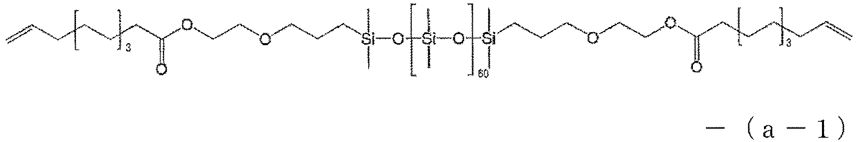

### [Synthesis Example 2 of Component (A)]

200 g of carbinol-modified polysiloxane (the following formula (8)), 100 g of toluene, and 13.6 g of triethylamine are put into a separable flask having a capacity of 1 liter equipped with an agitator, a dropping funnel, a thermometer, and a cooling tube, and the mixture was stirred for a certain time at room temperature, and then 24.7 g of undecenoyl chloride (weight ratio satisfying 1.1 of acid chloride relative to 1 of hydroxyl group in the carbinol-modified silicone) was dropped to the mixture with using a dropping funnel under nitrogen gas atmosphere (flow).

Other than the above, the same manner as described in [Synthesis Example 1 of Component (A)] was proceeded, and the component (A) polysiloxane (a-2) having two alkenyl groups per molecule was obtained.

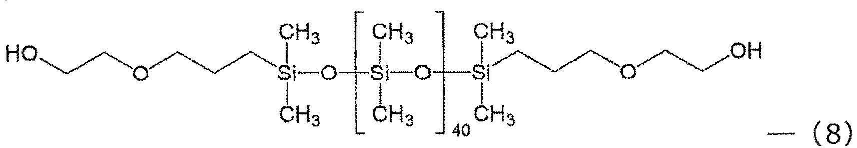

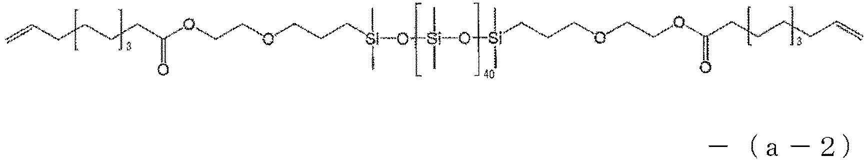

### [Synthesis Example of Component (B)]

For the component (B), a compound obtained according to the conventionally known means and methods can be used, but it is not limited to these. Here, according to the following general formula (2), four kinds of compound, the following b-1 to b-4, were synthesized for an organohydrogenpolysiloxane having at least two hydrogen atoms bonded to a silicon atom per molecule. 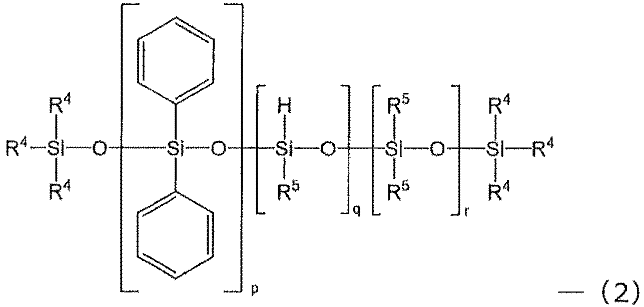
(b-1) p=1, q=6, r=1. Two of R⁴s are hydrogen atoms, and others are methyl groups. R⁵ is a methyl group.
(b-2) p=2, q=2, r=0. Two of R⁴s are hydrogen atoms, and others are methyl groups. R⁵ is a methyl group.
(b-3) p=0, q=8, r=24. Two of R⁴s are hydrogen atoms, and others are methyl groups. R⁵ is a methyl group.
(b-4) p=6, q=26, r=0. Two of R⁴s are hydrogen atoms, and others are methyl groups. R⁵ is a methyl group.

### [Preparation Example 1 of Aqueous Dispersion of Silicone Rubber Spherical Particle]

93.8 g of polysiloxane(a-1) having two alkenyl groups per molecule, which was synthesized according to the above [Synthesis Example 1 of Component (A)], 6.2 g of phenylmethylhydrogenpolysiloxane (b-1) (blended amount satisfying 1.13 of hydrosilyl group of the component (b-1) relative to 1 of aliphatic unsaturated group in the component (a-1)), which is synthesized according to the above [Synthesis Example of Component (B)], and 0.02 g of antioxidant: vitamin E / EFC (Product name: dl-α-tocopherol, manufactured by Kunisada Chemical Industry Co., Ltd.) were charged into a disposable cup having a capacity of 300 ml, and was stirred, dissolved, and dispersed at 2,000 rpm using a homomixer.

Next, the mixture was added with 0.5 g of polyoxyethylene lauryl ether (EO addition mol number = 9 mol) and 16.0 g of water, and stirred at 5,000 rpm using a homomixer, and in consequence the mixture became an oil in water type emulsion and thickened. Stirring was continued for another 10 minutes. Then, 83.5 g of water was added with stirring at 1,500 to 2,000 rpm to obtain a homogeneous white emulsion.

This emulsion is transferred to a glass flask having a capacity of 500 ml equipped with a stirring device using an anchor-shaped stirring blade, and the temperature is adjusted to 20 to 25°C. Under stirring, the emulsion was added with a mixed solution of 0.5 g of an isododecane solution of a platinum-vinyl group-containing disiloxane complex (component (C)) (platinum content: 0.5%) and 0.3 g of polyoxyethylene lauryl ether (EO addition mol number = 9 mol) and stirred at the same temperature for about 24 hours. Then, the temperature was re-adjusted to 40°C, and stirring was continued for 2 hours to obtain a homogeneous aqueous dispersion of silicone rubber spherical particle.

When the shape of the silicone rubber spherical particle in the obtained aqueous dispersion was observed with an optical microscope, it was a spherical shape. The volume average particle size measured by an electric resistance method particle size distribution measuring device "Multisizer 3" (manufactured by Beckman Coulter K.K.) was 7.3 µm.

The hardness of the obtained silicone rubber spherical particle was measured as follows. The polysiloxane (a-1) having two alkenyl groups per molecule, the organohydrogenpolysiloxane (b-1) having at least two hydrogen atoms bonded to a silicon atom per molecule, and an isododecane solution of a platinum-vinyl group-containing disiloxane complex (component (C)) (platinum content: 0.5%) are blended at a blended ratio described above and poured into an aluminum petri dish so as to have a thickness of 10 mm. After being allowed to stand at 25°C for 24 hours, the mixture was heated in a constant temperature bath at 50°C for 2 hours to obtain a rubber sample. The obtained rubber was removed from the aluminum petri dish, and the rubber hardness was measured with a durometer A hardness tester and found to be 30.

Next, the rubber sample prepared as described above was stored in a constant temperature and humidity chamber having a temperature of 70°C and a humidity of 90%, and the change in rubber hardness over time was investigated. A decrease in rubber hardness was confirmed after about 200 days, and the rubber hardness decreased to a measured value of 18 (about 60% of the initial value) after about one year. That is, it was confirmed that the silicone rubber spherical particles obtained in Preparation Example 1 exhibited decomposition due to external stimulation.

### [Preparation Example 2 of Aqueous Dispersion of Silicone Rubber Spherical Particle]

95.0 g of polysiloxane (a-2) having two alkenyl groups per molecule, which is synthesized according to the above [Synthesis Example 2 of Component (A)], 5.0 g of phenylmethylhydrogenpolysiloxane (b-1) (blended amount satisfying 1.13 of hydrosilyl group of the component (b-1) relative to 1 of aliphatic unsaturated group in the component (a-2)), which is synthesized according to the above [Synthesis Example of Component (B)], and 0.02 g of antioxidant: vitamin E / EFC (Product name: dl-α-tocopherol, manufactured by Kunisada Chemical Industry Co., Ltd.) were charged into a disposable cup having a capacity of 300 ml, and the mixture was stirred, dissolved, and dispersed at 2,000 rpm using a homomixer.

Next, the mixture was added with 0.4 g of polyoxyethylene lauryl ether (EO addition mol number = 9 mol) and 12.0 g of water, and stirred at 5,000 rpm using a homomixer, and in consequence the mixture became an oil in water type emulsion and thickened. Stirring was continued for another 10 minutes. Then, 87.6 g of water was added with stirring at 1,500 to 2,000 rpm to obtain a homogeneous white emulsion.

Other than the above, in the same manner as described in [Preparation Example 1 of Aqueous Dispersion of Silicone Rubber Spherical Particle], an aqueous dispersion of silicone rubber spherical particle was prepared and obtained. Note that the shape of the silicone rubber spherical particle in the obtained aqueous dispersion was spherical, and the volume average particle size measured by an electric resistance method particle size distribution measuring device was 5.5 µm. Further, the rubber hardness was 31 when measured by a durometer A hardness tester.

### [Preparation Example 3 of Aqueous Dispersion of Silicone Rubber Spherical Particle]

93.9 g of polysiloxane (a-1) having two alkenyl groups per molecule, which is synthesized according to the above [Synthesis Example 1 of Component (A)], 6.1 g of phenylmethylhydrogenpolysiloxane (b-1) (blended amount satisfying 1.4 of hydrosilyl group of the component (B) relative to 1 of aliphatic unsaturated group in the component (A)), which is synthesized according to the above [Synthesis Example of Component (B)], and 0.02 g of antioxidant: vitamin E / EFC (Product name: dl-α-tocopherol, manufactured by Kunisada Chemical Industry Co., Ltd.) were charged into a disposable cup having a capacity of 300 ml, and the mixture was stirred, dissolved, and dispersed at 2,000 rpm using a homomixer.

Other than the above, in the same manner as described in [Preparation Example 1 of Aqueous Dispersion of Silicone Rubber Spherical Particle], an aqueous dispersion of silicone rubber spherical particle was prepared and obtained. Note that the shape of the silicone rubber spherical particle in the obtained aqueous dispersion was spherical, and the volume average particle size measured by an electric resistance method particle size distribution measuring device was 5.5 µm. Further, the rubber hardness was 34 when measured by a durometer A hardness tester.

### [Preparation Example of Silicone Rubber Spherical Particle (Powder)]

The aqueous dispersion of silicone rubber spherical particle obtained according to the above [Preparation Example 1 of Aqueous Dispersion of Silicone Rubber Spherical Particle] was dehydrated to a moisture content of about 30% using a pressure filter. The dehydrated material was transferred to a glass flask having a capacity of 2 liters equipped with a stirring device using an anchor-shaped stirring blade, added with 1,000 ml of water, stirred for 30 minutes, and then dehydrated using a pressure filter.

Next, the dehydrated material was transferred again to a glass flask having a capacity of 2 liters equipped with a stirring device using an anchor-shaped stirring blade, added with 1,000 ml of water, stirred for 30 minutes, and then dehydrated using a pressure filter. Then, the dehydrated material was dried in a reduced-pressure dryer at a pressure reduction degree of 3×10⁻³ Pa at a temperature of 100°C to remove water.

Through these processes, powdered silicone rubber spherical particle was obtained.

### [Preparation Example of Silicone Composite Particle]

194.8 g of the aqueous dispersion of silicone rubber spherical particle obtained according to the above [Preparation Example 1 of Aqueous Dispersion of Silicone Rubber Spherical Particle] was transferred to a glass flask having a capacity of 2 liters equipped with a stirring device using an anchor-type stirring blade, and added with 670.1 g of ion exchange water, 17.9 g of 28% aqueous ammonia, and 0.39 g of a 40% dimethyldiallyl ammonium chloride polymer aqueous solution (Product name: ME POLYMER H40W, manufactured by TOHO Chemical Industry Co., Ltd.). After adjusting the temperature to 5 to 10°C, 17.2 g of methyltrimethoxysilane (KBM-13; manufactured by Shin-Etsu Chemical Co., Ltd.) was added dropwise over 20 minutes. During this period, the liquid temperature was maintained at 5 to 10°C, and the mixture was further stirred for 1 hour. Next, the mixture was heated to 55 to 60°C, and stirred for 1 hour while maintaining the temperature. By these process, the hydrolysis and polycondensation reaction of methyltrimethoxysilane was sufficiently proceeded and completed.

The obtained aqueous dispersion of the silicone composite particle was dehydrated to a water content of about 30% using a pressure filter. The dehydrated material was transferred to a glass flask having a capacity of 2 liters equipped with a stirring device using an anchor-shaped stirring blade, added with 1,000 ml of water, stirred for 30 minutes, and then dehydrated using a pressure filter.

The dehydrated material was transferred again to a glass flask having a capacity of 2 liters equipped with a stirring device using an anchor-shaped stirring blade, added with 1,000 ml of water, stirred for 30 minutes, and dehydrated using a pressure filter. Then, the dehydrated material was dried in a reduced-pressure dryer at a pressure reduction degree of 3×10⁻³ Pa at a temperature of 100°C to remove water.

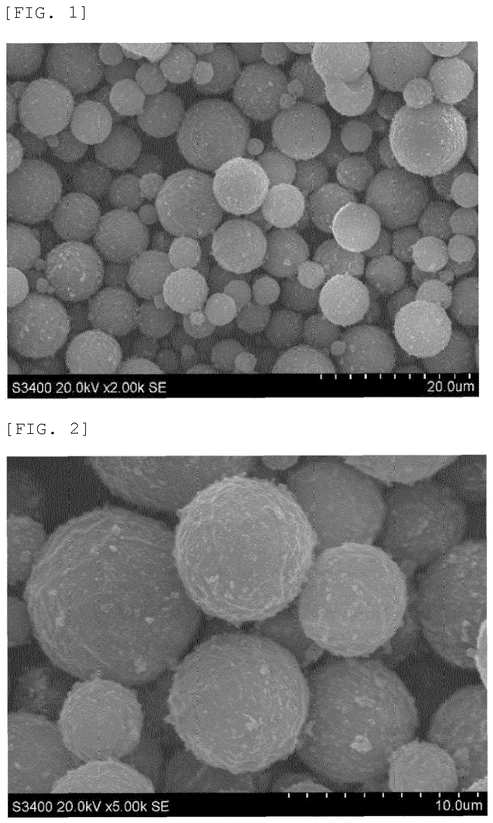

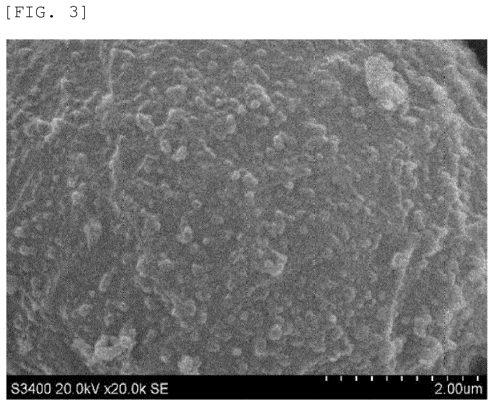

Finally, as a result of crushing the obtained dried material with a jet mill, a silicone composite particle having fluidity was obtained. As a result of observing the composite particles (FIG. 1 to 3: The same particles were observed at different magnifications.) with an electron microscope (scanning microscope S-4700; manufactured by Hitachi High-Technologies Corporation), it was confirmed that granular polymethylsilsesquioxanes having a particle size of 100 nm or less adhered to the particle surface. The amount of adhesion was 8.1 mass% with respect to 100 mass% of the silicone composite particle.

The obtained silicone composite particle was dispersed in water using a surfactant. As a result, a homogeneous aqueous dispersion was obtained. Next, the particle size of the silicone composite particle contained in the aqueous dispersion was measured by an electric resistance method particle size distribution measuring device "Multisizer 3" (manufactured by Beckman Coulter K.K.). The volume average particle size was 7.5 µm.

As described in the above, it was confirmed that a silicone spherical particle having an appropriate particle size and hardness could be obtained from the inventive liquid composition for silicone rubber spherical particle and that the obtained silicone spherical particle contained an ester bond in its crosslinked structure and exhibited decomposition property due to external stimulation. Furthermore, it was also confirmed that a composite particle having silsesquioxane adhered on its particle surface could be obtained from the silicone spherical particle.

### [Comparative Example]

### [Preparation Examples of Aqueous Dispersion of Silicone Rubber Spherical Particle]

250 g of methylvinylpolysiloxane having a kinematic viscosity of 130 mm²/s, 250 g of methylvinylpolysiloxane having a kinematic viscosity of 600 mm²/s, and 32 g of methylhydrogenpolysiloxane having a kinematic viscosity of 30 mm²/s (blended amount satisfying 1.1 of hydrosilyl group relative to 1 of olefinic unsaturated group) were charged into a disposable cup having a capacity of 1 L, and the mixture was stirred, and dissolved at 2,000 rpm using a homomixer.

Next, the mixture was added with 3.0 g of polyoxyethylene lauryl ether (EO addition mol number = 9 mol) and 50.0 g of water, and stirred at 5,000 rpm using a homomixer, and in consequence the mixture became an oil in water type emulsion and thickened. Stirring was continued for another 10 minutes. Then, 413.0 g of water was added with stirring at 2,000 rpm to obtain a homogeneous white emulsion.

This emulsion is transferred to a glass flask having a capacity of 1 liter equipped with a stirring device using an anchor-shaped stirring blade, and the temperature is adjusted to 15 to 20°C. The emulsion was added with a mixed solution of 0.8 g of an isododecane solution of a platinum-vinyl group-containing disiloxane complex (platinum content: 0.5%) and 1.0 g of polyoxyethylene lauryl ether (EO addition mol number = 9 mol) under stirring, and stirred at the same temperature for about 12 hours to obtain a homogeneous aqueous dispersion of silicone rubber spherical particle.

When the shape of the silicone rubber spherical particle in the obtained aqueous dispersion was observed with an optical microscope, it was a spherical shape. The volume average particle size measured by an electric resistance method particle size distribution measuring device "Multisizer 3" (manufactured by Beckman Coulter K.K.) was 9.0 µm.

The hardness of the obtained silicone rubber spherical particle was measured as follows. The methylvinylpolysiloxane having the kinematic viscosity of 130 mm²/s and 600 mm²/s, the methylhydrogenpolysiloxane, and an isododecane solution of a platinic chloride-olefin complex (platinum content: 0.5%) were mixed at the same blended ratio as the above Comparative Example and poured into an aluminum petri dish so as to have a thickness of 10 mm. After being left at 25°C for 24 hours, the mixture was heated in a constant temperature bath at 50°C for 1 hours to obtain a silicone rubber. The rubber hardness of the obtained silicone elastomer was measured with a durometer A hardness tester and found to be 34.

The rubber sample prepared as described above was stored in a constant temperature and humidity chamber having a temperature of 70°C and a humidity of 90%, and the change in rubber hardness over time was investigated. Even after one year, almost no decrease in rubber hardness was observed. That is, it was found that the silicone rubber spherical particles obtained in the above Comparative Example did not exhibit decomposition due to external stimulation.

As described above, it was confirmed that the silicone spherical particle not having an ester bond in its crosslinked structure had appropriate particle size and hardness, but did not exhibit decomposition due to external stimulation.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

### INDUSTRIAL APPLICABILITY

The inventive silicone rubber spherical particle and composite particle are expected to be useful especially in cosmetic applications, as their characteristic structural composition and structure make it possible to provide dispersibility during blending and use with compositions such as resins and paints. Furthermore, it is also expected to express and impart decomposition characteristics of powders by external stimuli.

## Claims

1. A liquid composition for a silicone rubber spherical particle comprising:
(A) a polysiloxane represented by the following general formula (1) and having at least two alkenyl groups per molecule, 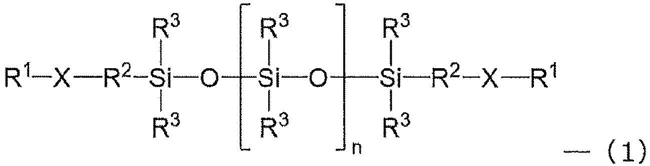 wherein R¹ is an alkenyl group having 1 to 20 carbon atoms, R² is a divalent hydrocarbon group having 1 to 20 carbon atoms and may have an ether bond, R³ is an alkyl group or an alkenyl group having 1 to 20 carbon atoms, X is an ester group having "-COO-" or "-OCO-", and "n" is a number satisfying 1≤n≤1000;
(B) an organohydrogenpolysiloxane represented by the following general formula (2) and having at least two hydrogen atoms bonded to a silicon atom per molecule, 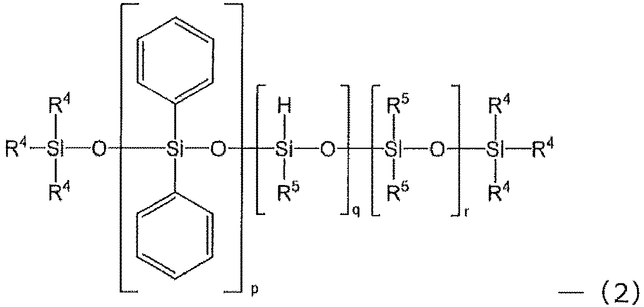 wherein R⁴ independently represents a hydrogen atom, or a monovalent hydrocarbon group or an alkoxy group having 1 to 12 carbon atoms, R⁵ represents a monovalent hydrocarbon group having 1 to 12 carbon atoms, and "p", "q", and "r" are numbers satisfying 0≤p≤200, 1≤q≤200, and 0≤r≤200, respectively (wherein at least one of: the number of alkenyl groups in the component (A); and the number of hydrogen atoms bonded to a silicon atom in the component (B) is at least 3 per molecule); and
(C) a hydrosilylation-reaction catalyst.

2. A silicone rubber spherical particle being a cured material of the liquid composition for a silicone rubber spherical particle according to claim 1, by addition reaction.

3. The silicone rubber spherical particle according to claim 2,
wherein the spherical particle has a volume average particle size determined in accordance with the method outlined in the description of 0.5 to 100 µm.

4. A silicone composite particle,
wherein a spherical or hemispherical polyorganosilsesquioxane or silica is adhered on a surface of the silicone rubber spherical particle according to claim 2 or 3.

5. A method for manufacturing the silicone rubber spherical particle according to claim 2 or 3, comprising the steps of:
(i) obtaining an O/W type emulsion comprising an aqueous phase component and an oil phase component comprising a liquid composition containing the components (A) to (C); and
(ii) obtaining an aqueous dispersion of a silicone rubber spherical particle by curing the liquid composition in an oil phase in the O/W type emulsion obtained in the step (i) through addition reaction.

6. The method for manufacturing the silicone rubber spherical particle according to claim 5, after the step (ii), further comprising the step of:
(iii) removing water present in an external phase and in the silicone rubber spherical particle, from the aqueous dispersion of the silicone rubber spherical particle obtained in the step (ii).

7. A method for manufacturing the silicone composite particle according to claim 4, comprising the steps of:
(i) obtaining an O/W type emulsion comprising an aqueous phase component and an oil phase component comprising a liquid composition containing the components (A) to (C);
(ii) obtaining an aqueous dispersion of a silicone rubber spherical particle by curing the liquid composition in an oil phase in the O/W type emulsion obtained in the step (i) through addition reaction; and
(iv) subjecting organotrialkoxysilane or tetraalkoxysilane to hydrolysis and polycondensation in the presence of the silicone rubber spherical particle obtained in the step (ii), water, and an alkaline substance, to make a spherical or hemispherical polyorganosilsesquioxane or silica adhere to a surface of the silicone rubber spherical particle.

## Patentansprüche

1. Flüssige Zusammensetzung für ein kugelförmiges Silikonkautschukpartikel, umfassend:
(A) ein Polysiloxan, das durch die folgende allgemeine Formel (1) repräsentiert wird und mindestens zwei Alkenylgruppen pro Molekül aufweist, 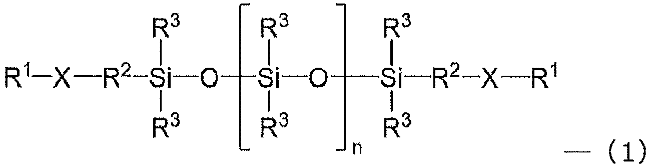 wobei R¹ eine Alkenylgruppe mit 1 bis 20 Kohlenstoffatomen ist, R² eine zweiwertige Kohlenwasserstoffgruppe mit 1 bis 20 Kohlenstoffatomen ist und eine Etherbindung aufweisen kann, R³ eine Alkylgruppe oder eine Alkenylgruppe mit 1 bis 20 Kohlenstoffatomen ist, X eine Estergruppe mit "-COO-" oder "-OCO-" ist und "n" eine Zahl ist, die 1 ≤ n ≤ 1000 erfüllt;
(B) ein Organowasserstoffpolysiloxan, das durch die folgende allgemeine Formel (2) repräsentiert wird und pro Molekül mindestens zwei an ein Siliciumatom gebundene Wasserstoffatome aufweist, 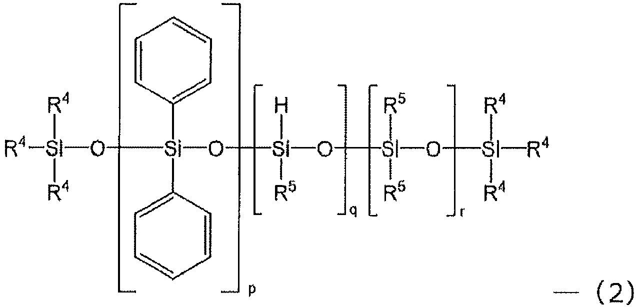 wobei R⁴ unabhängig voneinander ein Wasserstoffatom oder eine einwertige Kohlenwasserstoffgruppe oder eine Alkoxygruppe mit 1 bis 12 Kohlenstoffatomen repräsentiert, R⁵ eine einwertige Kohlenwasserstoffgruppe mit 1 bis 12 Kohlenstoffatomen repräsentiert und "p", "q" und "r" Zahlen sind, die jeweils 0 ≤ p ≤ 200, 1 ≤ q ≤ 200 und 0 ≤ r ≤ 200 erfüllen (wobei mindestens einer der folgenden Werte: die Anzahl der Alkenylgruppen in der Komponente (A) und die Anzahl der an ein Siliciumatom gebundenen Wasserstoffatome in der Komponente (B) mindestens 3 pro Molekül beträgt); und
(C) einen Hydrosilylierungsreaktionskatalysator.

2. Kugelförmiges Silikonkautschukpartikel, das ein durch eine Additionsreaktion ausgehärtetes Material der flüssigen Zusammensetzung eines kugelförmigen Silikonkautschukpartikels gemäß Anspruch 1 ist.

3. Kugelförmiges Silikonkautschukpartikel gemäß Anspruch 2,
wobei das kugelförmige Partikel eine volumengemittelte Partikelgröße von 0,5 bis 100 µm aufweist, die gemäß dem in der Beschreibung erläuterten Verfahren bestimmt wird.

4. Silikonverbundpartikel,
wobei ein kugelförmiges oder halbkugelförmiges Polyorganosilsesquioxan oder Siliciumdioxid an einer Oberfläche des kugelförmigen Silikonkautschukpartikels gemäß Anspruch 2 oder 3 haftet.

5. Verfahren zur Herstellung des kugelförmigen Silikonkautschukpartikels gemäß Anspruch 2 oder 3, das die Schritte umfasst:
(i) Erhalten einer Emulsion vom O/W-Typ, die eine wässrige Phasenkomponente und eine Ölphasenkomponente umfasst, die eine flüssige Zusammensetzung enthält, welche die Komponenten (A) bis (C) enthält; und
(ii) Erhalten einer wässrigen Dispersion eines kugelförmigen Silikonkautschukpartikels, indem die flüssige Zusammensetzung in einer Ölphase in der in Schritt (i) erhaltenen Emulsion vom Typ O/W durch Additionsreaktion ausgehärtet wird.

6. Verfahren zur Herstellung des kugelförmigen Silikonkautschukpartikels gemäß Anspruch 5, das nach dem Schritt (ii) ferner den Schritt umfasst:
(iii) Entfernen von Wasser, das in einer äußeren Phase und in dem kugelförmigen Silikonkautschukpartikel vorhanden ist, aus der in Schritt (ii) erhaltenen wässrigen Dispersion des kugelförmigen Silikonkautschukpartikels.

7. Verfahren zur Herstellung des Silikonverbundpartikels gemäß Anspruch 4, das die Schritte umfasst:
(i) Erhalten einer Emulsion vom O/W-Typ, die eine wässrige Phasenkomponente und eine Ölphasenkomponente umfasst, die eine flüssige Zusammensetzung enthält, welche die Komponenten (A) bis (C) enthält;
(ii) Erhalten einer wässrigen Dispersion eines kugelförmigen Silikonkautschukpartikels, indem die flüssige Zusammensetzung in einer Ölphase in der in Schritt (i) erhaltenen Emulsion vom O/W-Typ durch Additionsreaktion ausgehärtet wird; und
(iv) Durchführen einer Hydrolyse und Polykondensation an Organotrialkoxysilan oder Tetraalkoxysilan in Gegenwart des in Schritt (ii) erhaltenen kugelförmigen Silikonkautschukpartikels, Wasser und einer alkalischen Substanz, um ein kugelförmiges oder halbkugelförmiges Polyorganosilsesquioxan oder Siliciumdioxid an einer Oberfläche des kugelförmigen Silikonkautschukpartikels anzuhaften.

## Revendications

1. Composition liquide pour une particule sphérique en caoutchouc de silicone, comprenant:
(A) un polysiloxane représenté par la formule générale (1) suivante et comportant au moins deux groupes alcényle par molécule, 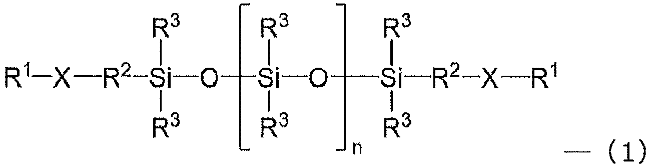 dans laquelle R¹ représente un groupe alcényle comportant de 1 à 20 atomes de carbone, R² représente un groupe hydrocarbure divalent comportant de 1 à 20 atomes de carbone et pouvant comporter une liaison éther, R³ représente un groupe alkyle ou un groupe alcényle comportant de 1 à 20 atomes de carbone, X représente un groupe ester comportant « -COO- » ou « -OCO- », et « n » est un nombre tel que 1 ≤ n ≤ 1 000;
(B) un organohydrogénopolysiloxane représenté par la formule générale (2) suivante et comportant au moins deux atomes d'hydrogène liés à un atome de silicium par molécule, 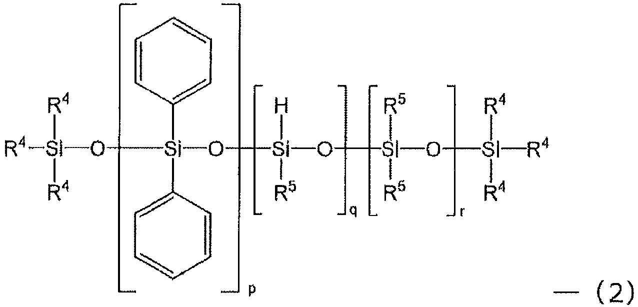 dans laquelle R⁴ représente indépendamment un atome d'hydrogène, un groupe hydrocarbure monovalent ou un groupe alcoxy comportant de 1 à 12 atomes de carbone, R⁵ représente un groupe hydrocarbure monovalent comportant de 1 à 12 atomes de carbone, et « p », « q » et « r » sont des nombres tels que 0 ≤ p ≤ 200, 1 ≤ q ≤ 200 et 0 ≤ r ≤ 200, respectivement (au moins l'un parmi: le nombre de groupes alcényle dans le composant (A); et le nombre d'atomes d'hydrogène liés à un atome de silicium dans le composant (B) est d'au moins 3 par molécule); et
(C) un catalyseur de réaction d'hydrosilylation.

2. Particule sphérique en caoutchouc de silicone constituée d'un matériau durci de la composition liquide pour une particule sphérique en caoutchouc de silicone selon la revendication 1, obtenue par réaction d'addition.

3. Particule sphérique en caoutchouc de silicone selon la revendication 2, dans laquelle la particule sphérique présente une granulométrie moyenne en volume, déterminée selon le procédé décrit dans la description, comprise entre 0,5 et 100 µm.

4. Particule sphérique en caoutchouc de silicone,
dans laquelle un polyorganosilsesquioxane ou une silice de forme sphérique ou hémisphérique est fixé(e) sur une surface de la particule sphérique en caoutchouc de silicone selon la revendication 2 ou 3.

5. Procédé de fabrication de la particule sphérique en caoutchouc de silicone selon la revendication 2 ou 3, comprenant les étapes consistant à:
(i) obtenir une émulsion de type E/H comprenant un composant en phase aqueuse et un composant en phase huileuse comprenant une composition liquide contenant les composants (A) à (C); et
(ii) obtenir une dispersion aqueuse d'une particule sphérique de caoutchouc de silicone par durcissement de la composition liquide dans une phase huileuse de l'émulsion de type E/H obtenue à l'étape (i) par réaction d'addition.

6. Procédé de fabrication de la particule sphérique en caoutchouc de silicone selon la revendication 5, après l'étape (ii), comprenant en outre l'étape consistant à:
(iii) éliminer l'eau présente dans une phase externe et dans la particule sphérique en caoutchouc silicone, de
la dispersion aqueuse de la particule sphérique de caoutchouc de silicone obtenue à l'étape (ii).

7. Procédé de fabrication de la particule sphérique en caoutchouc de silicone selon la revendication 4, comprenant les étapes consistant à:
(i) obtenir une émulsion de type E/H comprenant un composant de phase aqueuse et un composant de phase huileuse comprenant une composition liquide contenant les composants (A) à (C);
(ii) obtenir une dispersion aqueuse d'une particule sphérique de caoutchouc de silicone par durcissement de la composition liquide en phase huileuse dans l'émulsion de type E/H obtenue à l'étape (i) par réaction d'addition; et
(iv) soumettre un organotrialcoxysilane ou un tétraalkoxysilane à une hydrolyse et à une polycondensation en présence de la particule sphérique de caoutchouc de silicone obtenue à l'étape (ii), d'eau et d'une substance alcaline, afin d'amener un polyorganosilsesquioxane ou de la silice de forme sphérique ou hémisphérique à adhérer à la surface de la particule sphérique de caoutchouc de silicone.
